# EUROPEAN PATENT SPECIFICATION

(11) **EP 3 807 808 B1**
(45) Date of publication and mention of the grant of the patent: **19.07.2023**
(21) Application number: 19739412.5
(22) Date of filing: 18.06.2019
(51) Int. Cl.: G06V 40/20

(54) **SYSTEM CONFIGURED TO MONITOR THE MOTOR ACTIVITY OF A PERSON'S LOWER LIMBS AND METHOD THEREOF**
SYSTEM ZUR ÜBERWACHUNG DER MOTORAKTIVITÄT DER UNTEREN GLIEDMASSEN EINES MENSCHEN UND VERFAHREN DAFÜR
SYSTÈME CONFIGURÉ POUR SURVEILLER L'ACTIVITÉ MOTRICE DES MEMBRES INFÉRIEURS D'UNE PERSONNE ET PROCÉDÉ ASSOCIÉ

(30) Priority: 18.06.2018 IT 201800006405
(43) Date of publication of application: 21.04.2021
(73) Proprietor: Universita' Degli Studi di Roma "La Sapienza", 00185 Roma (RM) (IT)
(72) Inventor: IRRERA, Fernanda, 00185 Roma (IT)
(74) Representative: Ferriero, Paolo
(86) International application number: PCT/IT2019/050143
(87) International publication number: WO 2019/244186

(56) References cited:
- ARDIAN KITA ET AL: "Reliable and Robust Detection of Freezing of Gait Episodes With Wearable Electronic Devices", IEEE SENSORS JOURNAL., vol. 17, no. 6, 15 March 2017 (2017-03-15) , pages 1899-1908, XP055564624, US ISSN: 1530-437X, DOI: 10.1109/JSEN.2017.2659780
- PAOLO LORENZI ET AL: "Mobile Devices For The Real Time Detection Of Specific Human Motion Disorders", IEEE SENSORS JOURNAL., vol. 16, 1 December 2016 (2016-12-01), pages 8220-8227, XP055564683, US ISSN: 1530-437X, DOI: 10.1109/JSEN.2016.2530944
- WEIJUN TAO ET AL: "Gait Analysis Using Wearable Sensors", SENSORS, vol. 12, no. 12, 16 February 2012 (2012-02-16), pages 2255-2283, XP055272192, DOI: 10.3390/s120202255

## Description

The present invention relates to a system configured to monitor the motor activity of a person's lower limbs.

Particularly, the present invention relates to a wearable system configured to calculate at least one index and compare said at least one index with one or more predetermined threshold values for monitoring the motor activity of the lower limbs of a person, in particular a person with Parkinson's disease.

More particularly, by means of the system, object of the invention, it is possible to determine if said person walks with a regular gait or walks with an irregular gait or does not walk.

The expression "regular gait" refers to a walk in which the width of the step, the duration of the step and the frequency of the step of each leg are constant or substantially constant values during the walk and equal or substantially equal for the two legs.

The expression "irregular gait" refers to a walk in which the width of the step and/or the duration of the step and/or the frequency of the step of each leg are not constant or substantially constant values during the walk and/or to a walk with sudden and temporary interruptions.

If the person is a person with Parkinson's disease, this person can walk irregularly when subjected to a *Freezing of Gait* (FOG) event.

The event of *Freezing of Gait* may consist of an involuntary, sudden and temporary motor block, which can cause the person to fall.

For the sake of brevity the expression "*Freezing event"* will be used below to indicate a *Freezing of Gait* event.

### Prior art

Parkinson's disease occurs when the brain's production of the neurotransmitter called dopamine is significantly reduced.

The level of dopamine is reduced due to the degeneration or death of dopaminergic neurons, in an area of the deep structure of the brain, so-called *substantia nigra.*

Dopamine plays an important role in controlling signals (especially motor signals) directed from the brain to the rest of the body.

Due to the significantly reduced level of dopamine, the person with Parkinson's disease is subject to motor dysfunction, a dangerous consequence of which can be a *Freezing* event, as well as to cognitive and sensory dysfunctions.

Listed below are the possible motor dysfunctions that can be detected by a diagnostic test: gait disorders, dyskinesias, bradykinesias, akinesias, resting tremor, muscle dysfunction, involuntary muscle contractions, muscle cramps, dystonia, joint stiffness, posture disorders.

A remedy to mitigate the symptoms of Parkinson's disease is given by the possibility of administering a specific drug to the person suffering from this disease.

The active ingredient of the drug is Levodopa, whose doses to be administered and whose administration times depend on various factors, such as the stage of the disease, daily activities, nutrition, sleep/wake cycles.

A disadvantage of this remedy is due to the fact that an incorrect administration of the drug in terms of doses and/or times, on the one hand can make the treatment inefficient or on the other hand the treatment can aggravate the state of health of the person, causing a tachycardia and/or dyskinesia.

It should be noted that, to establish a pharmacological therapy that requires the periodic administration of a drug, the health institution needs a complete and exhaustive clinical picture of the person suffering from Parkinson's disease over time.

However, it is not easy to obtain such a clinical picture, as this health institution should continuously monitor over time the person suffering from Parkinson's disease, during its daily activities.

Several systems are known to discriminate if a person with Parkinson's disease walks, does not walk or is subject to a *Freezing* event.

A first system of the known type consists of two distinct components:
- an electronic device comprising a microprocessor, an accelerometer, a rechargeable battery and a wireless transmission module, and
- a processing unit, external to said electronic device.

The microprocessor acquires the data and, through the wireless transmission module, sends them to the said processing unit, so that the latter processes them.

When the system is in use, the electronic device is positioned on the waist of a person with Parkinson's disease by means of a belt, and the processing unit can be used by the person with Parkinson's disease.

The processing unit can be, for example, a tablet or a smartphone.

This processing unit also has the task of making the information on the physical activity of the person suffering from Parkinson's disease usable through an interface so that this information can be consulted by a doctor or a healthcare professional.

A disadvantage of the said first known system is the fact that the motor activity is monitored at the bust level and consequently does not allow to accurately monitor the motor activity of each lower limb, in particular during a *Freezing* event, nor to determine the amplitude, duration, frequency of the step of each leg.

This is due to the position in which the device of the system is placed with respect to the person's body.

A further disadvantage is given by the need for the person to have with him the processing unit (i.e. the tablet or the smartphone), external to said electronic device.

It should be considered that often the person suffering from Parkinson's disease is an elderly person, often intolerant because of this disease, and may not like the need to have said processing unit at hand.

A second system of the known type comprises three, or possibly four, distinct components:
- a first electronic device, to be placed on a portion of a first leg,
- a second electronic device, to be placed on a portion of a second leg,
- a processing unit, external to said electronic devices and common to both electronic devices.
- possibly a wireless headset.

Each electronic device is configured to acquire relative data from a respective leg and transmit them to the processing unit and the latter is configured to receive the data from each of said electronic devices and process them.

In other words, the electronic devices are not capable of processing the data they acquire and an processing unit external to said electronic devices is required to receive the data acquired from both electronic devices and process such data, as well as to send an acoustic signal to the wireless headset worn by the person (who wears the two electronic devices) and preferably to a healthcare professional.

Said processing unit can be for example a personal computer or a smartphone.

A second example of a system of the known type comprising two electronic devices and a processing unit (external to said electronic devices) for processing the data transmitted by each of said electronic devices is described in the publication entitled "*Mobile devices for the real-time detection of specific human motion disorders".*

In this publication, each electronic device is positioned in use on a respective tibia and the processing unit is external to each electronic device.

The processing requires that for each leg an angle is necessarily measured, indicated with α between two axes: a vertical axis and an axis parallel to the tibia (page 8224, first paragraph Fig. 8).

The measurement of this angle associated with the respective electronic device makes it possible to calculate the angular velocity associated with a respective leg.

These angular velocities are obtained through the derivative of the angle α and therefore depend on the value of this angle.

A first disadvantage of said known type system is given by the complexity of the system structure which is necessarily provided with three components: two electronic devices and a processing unit external to said electronic devices, without which the processing of the data acquired by said electronic devices would not be possible (among other things, the processing unit must be transported by the person wearing the electronic devices so that the person receives an acoustic and/or visual signal on the headset).

A second disadvantage of said second example of the system is the complexity of the processing algorithm due to the need to measure an angle to obtain the angular velocity, so that the computational load is significant.

A further disadvantage is due to the constraints imposed by the wireless communication between the electronic devices and the external processing unit based on the distance covered by the communication protocol (page 1902, col. 1, last paragraph).

To overcome this latter disadvantage, the same authors conceived the system described in the publication entitled "*Reliable and robust detection of freezing of Gait episodes with wearable electronic devices".*

Said system represents a third example of a system of the known type.

However, also said third example of the system of known type comprises two electronic devices, each of which is positioned in use on a respective tibia, a processing unit (external to said electronic devices) which is a smartphone and, possibly, a wireless headset. Said third example of a system of the known type brings an improvement in terms of reliability in determining *Freezing* events with respect to the second system of the known type. This improvement is due to the introduction of three new parts of the algorithm aimed at rejection of noise induced by the person's own behaviour (step A2.1, step A2.2, step A.2.3, page 1902-1905).

Unlike the second example of the system (in which the processing unit is preferably a personal computer), the processing unit is a smartphone (to decrease the weight of the processing unit that the person must carry with him).

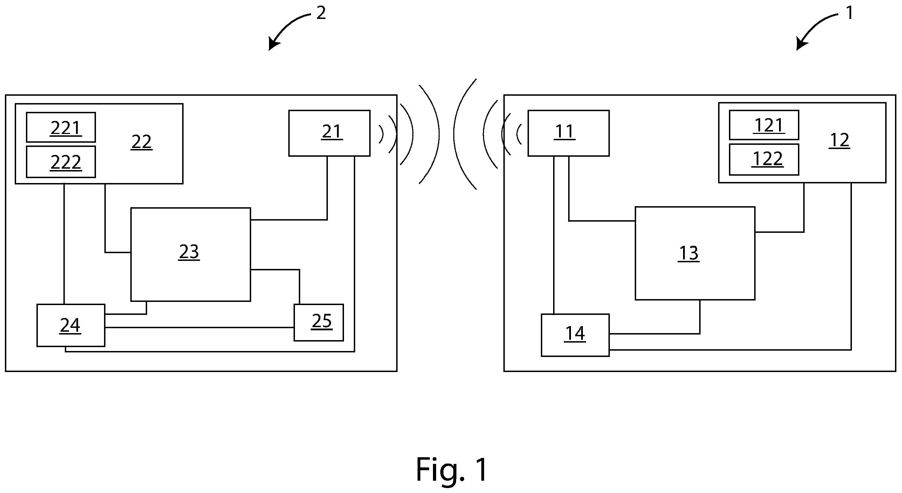

Like the system described above, each electronic device is configured to acquire data and send this data to the smartphone that processes this data. Therefore, also the data processing performed by the smartphone (i.e. the external processing unit of said third system) requires that a solid angle and its projection on the median plane between two axes are necessarily measured (for detecting *Freezing* events): the axis of gravity (which is a vertical axis) and an axis parallel to the tibia (this angle is indicated as β on page 1901 penultimate paragraph Fig. 1).

Similarly to the second example of a system of the known type, therefore, the angular speeds are obtained through the derivative of the angle β associated with each electronic device and therefore depend on the value of said angle.

A first disadvantage of said third example of a system of the known type is given by the complexity of the structure of the system which is necessarily provided with three components: two electronic devices and a processing unit external to said electronic devices, without which the processing of the acquired data from such electronic devices would not be possible (among other things, the processing unit must be transported by the person wearing the electronic devices so that the headset eventually worn by the person receives an acoustic signal).

A second disadvantage is given by the computational complexity due to the need to determine a solid angle, calculate the projections of said solid angle on the median plane of the person wearing the electronic devices and analyse said projections.

A further disadvantage is given by the need for the person to have said processing unit with him.

A disadvantage common to the systems described above is the impossibility of continuously monitoring physical activity throughout the day, due to the reduced energy autonomy of the systems.

This is due to the high energy consumption of the systems caused by the frequent communications of each electronic device with the processing unit, external to said electronic devices.

### Aim of the invention

The aim of the present invention is to overcome said disadvantages, providing a wearable monitoring system configured to monitor during the day the motor activity of a person's lower limbs, in particular a person with a Parkinson disease, without the need for said system to be provided with an external processing unit for processing the data sent by the two electronic devices, as required by the systems of the known type.

A second aim of the invention is to provide a system whose structure is simple and compact.

A further object of the present invention is to provide a system that has a limited energy consumption (both due to the use of limited computational resources and to a reduced energy used for wireless transmissions between the two electronic devices) and consequently is capable of operating in a autonomous way (i.e. without being connected to an electrical network) for a longer time than systems of known type.

This has been achieved by means of a system comprising a first electronic device which is a slave device and a second electronic device which is a master device, in which the slave device and the master device cooperate with each other to calculate at least a first index on the basis of the data acquired by each electronic device in order to monitor the motor activity of a person's lower limbs, without the need to provide a processing unit that is external to said two electronic devices.

In particular, the master device is configured not only to acquire data from the leg on which it is positioned, but also to receive the data sent by the slave device (positioned on a different leg from that on which the master device is positioned) and process all the data (i.e. the data acquired from the same master device and the data sent by the slave device) to obtain one or more indices.

In other words, the system, object of the present invention, is conceived both from the hardware and software point of view in such a way as to eliminate the external processing unit from the electronic devices, by means of a pair of electronic devices which communicate with each other, in which the master device is also conceived for processing data, as well as for acquiring data, and data processing is performed by a algorithm that is lighter than the algorithms used in the known systems described above and with reduced computational resources with respect to systems of the known type, as well as to increase the energy autonomy of the system, through the reduced computational resources needed for said algorithm and the reduced energy used for wireless transmissions between the two electronic devices.

### Object of the invention

It is therefore object of the invention a monitoring system for monitoring the motor activity of a person's lower limbs, where said system comprises a first electronic device which is a slave device and a second electronic device which is master device, to be positioned, in use, respectively on a portion of a first leg and on a portion of a second leg.

With reference to the slave device, said slave device comprises inside:
- first supplying means for supplying power to said slave device,
- a first wireless transceiver module for transmitting and receiving data to/from said master device,
- a first inertial measurement unit, comprising a first gyroscope and a first accelerometer, configured to:
   o acquire at each time instant *t*, through said first gyroscope, at least one first angular velocity about the x axis,
   o acquire at each time instant *t*, through said first accelerometer, a first triad of linear accelerations: a first linear acceleration along the x axis, a second linear acceleration along the y axis, and a third linear acceleration along the z axis,
- a first logic control unit, connected to said first inertial measurement unit and to said first wireless transceiver module, and configured to:
   o receive at each instant time t from said first inertial measurement unit said at least one first angular velocity about the x axis and said first triad of linear accelerations,
   o filter at each instant time t said at least one first angular velocity about the x axis by means of a first orientation filter to eliminate a first offset error associated with the first gyroscope, and obtain at least one further first angular velocity about the x axis at each instant time t, where said first orientation filter is a first Mahony filter configured to eliminate said first offset error through said first triad of linear accelerations,
   o transmit at each instant time t the value of said at least one further first angular velocity about the axis x to said master device through said first wireless transceiver module.

With reference to the master device, said master device comprises inside:
- second supplying means for supplying power to said master device,
- a second wireless transceiver module for transmitting and receiving data to/from said slave device,
- a second inertial measurement unit comprising a second gyroscope and a second accelerometer, configured to:
   o acquire at each instant time t through said second gyroscope at least one first angular velocity about the x axis,
   o acquire at each instant time *t,* through said second accelerometer, a second triad of linear accelerations: a first linear acceleration along the x axis, a second linear acceleration along the y axis, and a third linear acceleration along the z axis,
- a second logic control unit, connected to said second inertial measurement unit and to said second wireless transceiver module, and configured to:
   o receive at each instant time t from said second inertial measurement unit said at least one first angular velocity about the x axis and said second triad of linear accelerations,
   o filter at each instant time t said at least one first angular velocity about the x axis by means of a second orientation filter to eliminate a second offset error associated with the second gyroscope, and obtain at least one further first angular velocity about the x axis at each instant time *t*, where said second orientation filter is a second Mahony filter configured to eliminate said second offset error through said second triad of linear accelerations,
   o calculate at each instant time t the module of said further first angular velocity about the x axis, associated with the slave device, to obtain its absolute value,
   o filter at each instant time t said absolute value of said further first angular velocity about the x axis associated with the slave device by means of a first low pass filter, to obtain an absolute filtered value at each instant time t,
   o calculate at each instant time t the module of said further first angular velocity about the x axis associated with the master device, to obtain its absolute value,
   o filter at each instant time t said absolute value of said further first angular velocity about the x axis associated with the master device by means of a second low pass filter, to obtain an absolute filtered value at each instant time t,
   o calculate at each instant time t a first index K adding the filtered absolute value of said further first angular velocity about the x axis associated with the slave device in an instant time t and the absolute filtered value of said further first angular velocity about the x axis associated with the master device at the same instant time t,
   o verify at each instant time t if said first index K is less than a predetermined first threshold value *T₁*, so as to detect if said person does not walk,
   o if said first index K is greater than said predetermined first threshold value *T₁*, verify if said first index K is between said predetermined first threshold value *T₁* and a predetermined second threshold value *T₂*, greater than said predetermined first threshold value *T₁*, so as to detect if said person walks with an irregular gait, or if said first index K is greater than said predetermined second threshold value *T₂*, so as to detect if said person walks with a regular gait.

Preferred further embodiments of the monitoring system are disclosed in the dependent claims.

The present invention relates also to a method for monitoring the motor activity of a person's lower limbs by means of said monitoring system.

Said method comprises the following steps:
A) acquiring at each instant time t at least a first angular velocity about the x axis associated with said slave device and a first triad of linear accelerations associated with said slave device: a first linear acceleration along the x axis, a second linear acceleration along the y axis, and a third linear acceleration along the z axis,
B) filtering at each instant time t said at least one first angular velocity about the x axis by means of a first orientation filter to eliminate a first offset error associated with the first gyroscope, and obtain a further first angular velocity about the x axis at each instant time *t*, where said first orientation filter is a first Mahony filter configured to eliminate said first offset error through said first triad of linear accelerations,
C) acquiring at each instant time t at least a first angular velocity about the x axis associated with said master device and a second triad of linear accelerations associated with said master device: a first linear acceleration along the x axis, a second linear acceleration along the y axis, and a third linear acceleration along the z axis,
D) filtering at each instant time t said at least one first angular velocity about the x axis by means of a second orientation filter to eliminate a second offset error associated with the second gyroscope, and obtaining a further first angular velocity about the x axis at each instant time *t*, where said second orientation filter is a second Mahony filter configured to eliminate said second offset error through said second triad of linear accelerations,
E) calculating at each instant time t the module of said further first angular velocity about the x axis associated with the slave device, to obtain an absolute value,
F) filtering at each instant time t said module of said further first angular velocity about the x axis associated with the slave device by means of a first low pass filter to obtain an absolute filtered value,
G) calculating at each instant time t the module of said further first angular velocity about the x axis associated with the master device, to obtain an absolute value,
H) filtering at each instant time t said module of said further first angular velocity about the x axis associated with the master device by means of a second low pass filter to obtain its absolute filtered value,
I) calculating at each instant time *t* a first index *K* adding the filtered absolute value of said further first angular velocity about the x axis associated with the slave device in an instant time t with the absolute filtered value of said further first angular velocity around the x axis associated with master device at the same instant time t,
where said step I) comprises the following substeps:
11) verifying if at each instant time t said first index *K* is less than a predetermined first threshold value *T₁*, so as to detect if said person does not walk,
I2) if said first index K is greater than said predetermined first threshold value *T₁*, verifying if said first index K is between said predetermined first threshold value *T₁* and a predetermined second threshold value *T₂*, greater than said predetermined first threshold value *T₁*, so as to detect whether said person walks with an irregular gait, or if said first index K is greater than said predetermined second threshold value *T₂*, so as to detect if said person walks with a regular gait.

Preferred further embodiments of the method are disclosed in the dependent claims.

### List of attached Figures

The present invention will be now described, for illustrative, but not limitative purposes, according to its embodiment, making particular reference to the enclosed figures, wherein:
Figure 1 is a schematic view of the system, object of the invention, comprising a first electronic device which is a slave device and a second electronic device which is a master device;
Figure 2 shows a table with the values of the angular velocities and the linear accelerations, referred to the first leg and the second leg of a person and acquired by the first electronic device in use and the second electronic device in use, and processed by the respective logic control units of said electronic devices;
Figure 3 is a schematic view of a person on whose shins a respective electronic device of the system of Figure 1 has been applied;
Figure 4 shows a person who walks wearing the system object of the invention;
Figure 5A is a detail of a first leg of the person of Figure 4 to show the reference system of a first gyroscope included in a first inertial measurement unit of the first electronic device with respect to the terrestrial reference system.
Figure 5B is a detail of a second leg of the person of Figure 4 to show the reference system of a second gyroscope included in a second inertial measurement unit of the second electronic device with respect to the terrestrial reference system.

### Detailed description of the technical solution

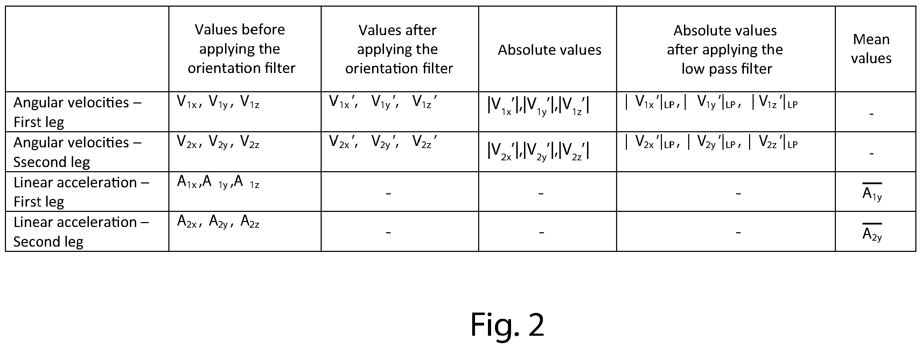

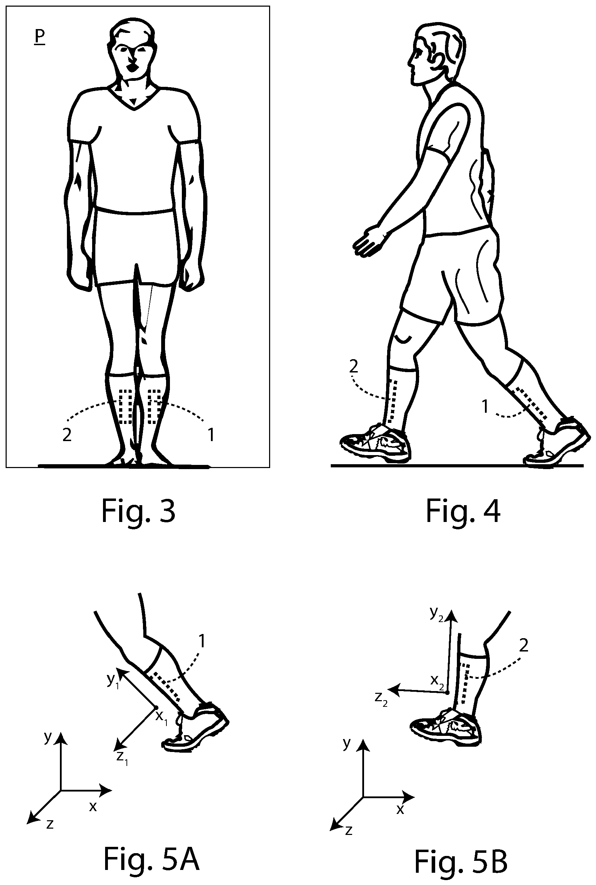

With reference to Figures 1-5B, a monitoring system for monitoring the motor activity of a person's lower limbs.

In particular, said monitoring system is a system in use wearable by said person.

In the embodiment being disclosed, the monitoring system is configured to calculate at least a first index *K* to determine if the person walks with a gait that can be regular or irregular or does not walk.

Said monitoring system comprises:
- a first electronic device which is a slave device 1, to be positioned, in use, on a portion of a first leg,
- a second device which is a master device 2, to be positioned, in use, on a portion of a second leg.

Below, the expression "slave device" as an alternative to the expression "first electronic device" and the expression "master device" as an alternative to the expression "second electronic device" will be used interchangeably.

With particular reference to the slave device 1, said slave device 1 comprises inside:
- a first wireless transceiver module 11 for transmitting and receiving data to/from said master device 2,
- a first inertial measurement unit 12 comprising a first gyroscope 121 and a first accelerometer 122, configured to acquire at each time instant t, through said first gyroscope 121, at least one first angular velocity about the x axis V₁ₓ, and, through said first accelerometer 122, a first triad of linear accelerations A₁ₓ,A_{1y},A_{1z}: a first linear acceleration along the x axis A₁ₓ, a second linear acceleration along the y axis A_{1y}, and a third linear acceleration along the z axis A_{1z},
- a first logic control unit 13, connected to said first inertial measurement unit 12 and to said first wireless transceiver module 11, and configured to:
   o receive at each instant time t from said first inertial measurement unit 12 said at least one first angular velocity about the x axis V₁ₓ and said first triad of linear accelerations A₁ₓ,A_{1y},A_{1z},
   o filter at each instant time *t* said at least one first angular velocity about the x axis V₁ₓ by means of a first orientation filter to eliminate a first offset error associated with the first gyroscope 121, and obtain at least one further first angular velocity about the x axis V₁ₓ' at each instant time *t*,
   o transmit at each instant time *t* the value of said at least one further first angular velocity about the axis x V₁ₓ' to said master device 2 through said first wireless transceiver module 11.

With reference to the master device 2, said master device comprises inside:
- a second wireless transceiver module 21 for transmitting and receiving data to/from said slave device 1,
- a second inertial measurement unit 22 comprising a second gyroscope 221 and a second accelerometer 222, configured to acquire at each instant time *t,* through said second gyroscope 221, at least one first angular velocity about the x axis V₂ₓ, and, through said second accelerometer 222, a second triad of linear accelerations A₂ₓ,A_{2y},A_{2z}: a first linear acceleration along the x axis A₂ₓ, a second linear acceleration along the y axis A_{2y}, and a third linear acceleration along the z axis A_{2z},

- a second logic control unit 23, connected to said second inertial measurement unit 22 and to said second wireless transceiver module 21, and configured to:
   o receive at each instant time *t* from said second inertial measurement unit 22 said at least one first angular velocity about the x axis V₂ₓ and said second triad of linear accelerations A₂ₓ,A_{2y},A_{2z},
   o filter at each instant time *t* said at least one first angular velocity about the x axis V₂ₓ by means of a second orientation filter to eliminate a second offset error associated with the second gyroscope 221, and obtain at least one further first angular velocity about the x axis V₂ₓ' at each instant time *t*,
   o calculate at each instant time t the module of said further first angular velocity about the x axis V₁ₓ', associated with the slave device 1, to obtain its absolute value |V₁ₓ'|,
   o filter at each instant time *t* said absolute value of said further first angular velocity about the x axis |V₁ₓ'| associated with the slave device 1 by means of a first low pass filter, to obtain an absolute filtered value |V₁ₓ'|_{LP} at each instant time *t*,
   o calculate at each instant time *t* the module of said further first angular velocity about the x axis V₂ₓ' associated with the master device 2, to obtain its absolute value |V₂ₓ'|,
   o filter at each instant time *t* said absolute value of said further first angular velocity about the x axis |V₂ₓ'| associated with the master device 2 by means of a second low pass filter, to obtain an absolute filtered value |V₂ₓ'|_{LP} at each instant time *t*,
   o calculate at each instant time *t* a first index *K* adding the filtered absolute value of said further first angular velocity about the x axis |V₁ₓ'|_{LP} associated with the slave device 1 in an instant time *t* and the absolute filtered value of said further first angular velocity about the x axis |V₂ₓ'|_{LP} associated with the master device 2 at the same instant time *t*,
   o verify at each instant time *t* if said first index *K* is less than a predetermined first threshold value *T₁*, so as to detect if said person does not walk,
   o if said first index *K* is greater than said predetermined first threshold value *T₁*, verify if said first index *K* is between said predetermined first threshold value *T₁* and a predetermined second threshold value *T₂*, greater than said predetermined first threshold value *T₁*, so as to detect if said person walks with an irregular gait, or if said first index *K* is greater than said predetermined second threshold value *T₂*, so as to detect if said person walks with a regular gait.

Furthermore, said slave device 1 and said master device 2 are provided respectively of first power supplying means 14 (for supplying power to said slave device 1) and second power supplying means 24 (for supplying power to said master device 2).

Said first power supplying means 14 are connected to said first wireless transceiver module 11, to said first inertial measurement unit 12 and to said first logic control unit 13.

Said second power supplying means 24 are connected to said second wireless transceiver module 21, to said second measurement inertial unit 22, to said second logic control unit 23.

Advantageously, the fact that each electronic device internally comprises respective power supplying means makes each electronic device electrically independent of the other, without the need for each electronic device to be connected to an electrical network.

Furthermore, in the embodiment being disclosed, said master device 2 comprises inside also storage means 25 for storing data (for example the value of the first index *K* and the further indices disclosed below), connected to said second logic control unit 23.

Advantageously, storing the values of one or more indexes in said storage means 25 allows access to information on the motor activity of the person over time.

However, it is not necessary that said master device 2 is provided of storage means.

With reference to the first low pass filter and second low pass filter, each low pass filter has a cut-off frequency between 0Hz and 3Hz, which is the frequency band associated with a walk with a regular gait.

Each cut-off frequency is chosen so as to be higher than 0Hz to avoid that the time window in which the motor activity is monitored is too large and therefore the response time by the monitoring system is a long time and to be less than 3Hz to avoid that the time window in which motor activity is monitored is too small and to avoid considering spectral contributions at frequencies close to 3Hz.

In the embodiment being disclosed, the cut-off frequency of the first low pass filter is equal to the cut-off frequency of the second low pass filter.

Advantageously, the cut-off frequency of the first low pass filter equal to the cut-off frequency of the second low pass filter allows to the second electronic device, i.e. to the master device, to use a single low pass filter.

In other words, in this situation, the first low pass filter coincides with the second low pass filter and, preferably, the cut-off frequency is between 0,83Hz e 2,7Hz.

In particular, said first orientation filter is configured to eliminate said first offset error, through said first triad of linear accelerations A₁ₓ,A_{1y},A_{1z}, and said second orientation filter is configured to eliminate said second offset error, through said second triad of linear accelerations A₂ₓ,A_{2y},A_{2z}.

With reference to each of the offset errors (referred to the gyroscopes) mentioned above and to those which will be mentioned later in the description, it is known that a gyroscope has an offset error.

This offset error is due to different noise sources.

In general, the most usual noise sources are: white noise, flicker and noise due to the thermo-mechanical nature associated with the structure of the gyroscope [Passaro, Vittorio, et al. "Gyroscope technology and applications: A review in the industrial perspective." Sensors 17.10 (2017): 2284].

The offset error is due to a constant angular velocity (associated with the gyroscope) which does not actually exist.

For example, if an inertial measurement unit is motionless, due to the offset error, the angular velocity measured by the gyroscope may be different from zero.

In the inertial measurement unit, this offset error is identified by the gravity vector measured by the accelerometer of the respective inertial measurement unit (the gravity vector is obtained from the acceleration components on the three axes x, y, z measured by the accelerometer itself).

In the embodiment being disclosed, said first orientation filter and said second orientation filter to eliminate the offset errors are respectively a first Mahony filter and a second Mahony filter.

The Mahony filter is also called "Mahony algorithm" (R. Mahony, T. Hamel and J-M. Pflimlin "Non linear complementary filters on the special orthogonal group" in IEEE-transactions on automatic control 53.5 (2008), pages 1203-17).

Each Mahony filter eliminates the offset error associated with the respective gyroscope by comparing the orientation of the reference system of the respective inertial measurement unit (which includes a respective gyroscope and a respective accelerometer) and the orientation of the system of terrestrial reference, through the use of quaternions.

The quaternion is a complex four-dimensional number used to represent the orientation of a rigid body or a three-dimensional reference system.

In other words, the quaternion behaves like a four-component rotation matrix.

Consequently, the quaternion allows the passage from the terrestrial reference system to the reference system of the inertial measurement unit.

The terrestrial reference system has an x axis and a y axis, each of which is parallel to a terrestrial plane, and a z axis, perpendicular to said terrestrial plane. The z axis will then be parallel to the terrestrial gravity vector.

The Mahony filter is configured to perform a plurality of iterations over time.

In the first iteration it is assumed that the terrestrial reference system and the reference system of the inertial measurement unit are coincident.

Consequently, based on this assumption, a first quaternion is defined in a known way, i.e. the quaternion {1 0 0 0}.

Moreover, in the first iteration, the gravity vector is measured through the three components of the accelerometer (Ax, Ay, Az) and a vector product is calculated between said gravity vector (which represents the direction of the z axis of the terrestrial reference system with respect to the reference system of the inertial measurement unit) and the z axis of the reference system of the inertial measurement unit. If this vector product is different from zero, it corresponds to the error between the direction of the z axis of the terrestrial reference system with respect to the reference system of the inertial measurement unit. Consequently, in this situation, the assumption that the terrestrial reference system and the reference system of the inertial measurement unit are the same is not correct.

This error is used to compensate for the gyroscope offset error.

Once the angular velocity of the gyroscope has been corrected (i.e. the offset error has been eliminated), said angular velocity is used to calculate a second quaternion to obtain the correct position of the inertial measurement unit of said electronic device with respect to the terrestrial reference system.

Said second quaternion is used as an input in a second iteration.

In the second iteration, using the said second quaternion, it is possible to obtain the z axis of the reference system of the inertial measurement unit with respect to the terrestrial reference system. Furthermore, a vector product is calculated between the gravity vector (calculated by the accelerometer in the second iteration) and the z axis of the reference system of the inertial measurement unit to obtain an error. If this vector product is different from zero, it corresponds to the error between the direction of the z axis of the terrestrial reference system with respect to the reference system of the inertial measurement unit.

This error is used to compensate for the gyroscope offset error in said second iteration.

Finally, once the angular velocity of the gyroscope has been corrected (i.e. the offset error has been eliminated), a further quaternion is calculated (article of 2008 Mahony, Robert, Tarek Hamel, and Jean-Michel Pflimlin. "Nonlinear complementary filters on the special orthogonal group." IEEE Transactions on automatic control 53.5 (2008): 1203-1217, e articolo di Madgwick, Sebastian OH, Andrew JL Harrison, and Ravi Vaidyanathan. "Estimation of IMU and MARG orientation using a gradient descent algorithm." 2011 IEEE international conference on rehabilitation robotics. IEEE, 2011).

In other words, apart from the first iteration, each iteration has as input a quaternion calculated after correcting the angular velocity.

The number of iterations depends on the monitoring time of the person wearing the electronic devices, each of which includes a respective inertial measurement unit.

Advantageously, the use of a Mahony filter for each electronic device allows the respective logic control units to have a reduced computational load.

As a result, the energy consumption of each electronic device is reduced.

Advantageously, the monitoring system can be configured to go into sleep mode so as to save energy.

The term "sleep mode" refers to a mode in which the number of operations per second performed by the inertial measurement unit, the control logic unit and the wireless transceiver module of the respective electronic device is reduced compared to the number of operations per second performed by the inertial measurement unit, the logic control unit and the transceiver module of the individual electronic devices when in use.

In general, the operations performed in sleep mode depend on the technical characteristics of the logic control unit, of the inertial measurement unit and of the wireless transceiver module inside the single electronic device.

Both the slave device 1 and the master device 2 of the monitoring system can go into sleep mode when certain conditions are verified, explained below.

On the one hand, with reference to the slave device 1, it is preferable that said first logic control unit 13 is configured to:
o calculate the mean value of the second linear acceleration along the y axis A̅_̅{̅1̅y̅}̅ of said first triad of linear accelerations associated with the slave device 1 in a predetermined first time interval Δt,
o verify (after said predetermined first time interval Δt) whether the mean value of the second linear acceleration along the y axis A̅_̅{̅1̅y̅}̅ of said first triad of linear accelerations associated with the slave device 1 is greater than a predetermined linear acceleration threshold value T_{A}, so as to detect if the tibia of the person's first leg is perpendicular to the ground,
o send the result of the verification referred to the mean value of said second linear acceleration along the y axis A̅_̅{̅1̅y̅}̅ of said first triad of linear accelerations to the master device 2, through the first wireless transceiver module 11 of said slave device 1,

On the other hand, with reference to the master device 2, said second logic control unit 23 is configured for:
o receive the result of the verification referred to the mean value of said second linear acceleration along the y axis A̅_̅{̅1̅y̅}̅ of said first triad of linear accelerations A₁ₓ,A_{1y},A_{1z} (associated with the slave device 1),
o calculate the mean value of the second linear acceleration along the y axis A̅_̅{̅2̅y̅}̅ of said second triad of linear accelerations associated with the master device 2 in said predetermined first time interval Δt,
o verify (after said predetermined first time interval Δt) whether the mean value of the second linear acceleration along the y axis A̅_̅{̅2̅y̅}̅ of said second triad of linear accelerations A₂ₓ,A_{2y},A_{2z} (associated with the master device 2) is greater than said predetermined linear acceleration threshold value T_{A}, so as to detect whether the tibia of the person's second leg is perpendicular to the ground,
o turn to sleep mode said slave device 1 and said master device 2 in one of the following two conditions:
   ▪ (first condition) when said mean value of said second linear acceleration along the y axis A̅_̅{̅1̅y̅}̅ of said first triad of linear accelerations A₁ₓ,A_{1y},A_{1z} and said mean value of said second linear acceleration along the y axis A̅_̅{̅2̅y̅}̅ of said second triad of linear accelerations A₂ₓ,A_{2y},A_{2z} remain greater than said predetermined first linear acceleration threshold value T_{A} for a predetermined second time interval Δt', greater than said predetermined first time interval Δt, and when said first index *K* remains lower than said predetermined first threshold value *T₁* for a predetermined second time interval Δt',
   ▪ (second condition) when the mean value of the second linear acceleration along the y axis A̅_̅{̅1̅y̅}̅ of said first triad of linear accelerations is less than said predetermined first linear acceleration threshold value T_{A} and/or the mean value of the second linear acceleration along the y axis A̅_̅{̅2̅y̅}̅ of said second triad of linear accelerations is/are less than of said predetermined first linear acceleration threshold value T_{A} and when said first index K remains lower than said predetermined first threshold value *T₁*.

In the case where the mean value of the second linear acceleration along the y axis A̅_̅{̅1̅y̅}̅ of said first set of linear accelerations and the mean value of the second linear acceleration along the y axis A̅_̅{̅2̅y̅}̅ of said second set of linear accelerations are greater than said predetermined first linear acceleration threshold value T_{A}, the person can be standing without walking or sitting with both perpendicular tibia on the ground. In this situation it is necessary to wait for the predetermined second time interval Δt' before the system is put on sleep mode to be certain that the person is sitting and not standing.

In the case where the mean value of the second linear acceleration along the axis A̅_̅{̅1̅y̅}̅ of the said first set of linear accelerations is lower than the said predetermined first linear acceleration threshold value T_{A} and/or the mean value of the second linear acceleration along the axis y A̅_̅{̅2̅y̅}̅ of said second set of linear accelerations is/are less than said predetermined first linear acceleration threshold value T_{A}, the person can be seated with at least one of the leg tibias not perpendicular to the ground or lying down.

The second condition refers to the situation in which a person has at least one of the two tibias that is not perpendicular to the ground and therefore not parallel to the gravity vector (A_{1Y} < T_{A} e/o A_{2Y} < T_{A}) and is in state of rest (*K* < T₁).

Consequently, in this situation, the person is not standing but can be seated with at least one of the two tibias not perpendicular to the ground or can be lying down. To determine if the person is walking (with a regular or irregular gait) it is necessary that said person tries to take a step. Since in this second condition the person is not standing, said person is not walking or trying to walk and the system can be put on sleep mode, without a predetermined time interval is elapsed.

Furthermore, a person to stand up (compared to when he is sitting or lying down) will necessarily have to move his legs and then exit the state of the rest (and then enter the condition where *K* > T1). In this case, the system will return to work at full capacity (i.e. the system exits the sleep mode).

The system exits the sleep mode by applying one of the known techniques.

The exit from the sleep mode occurs through the instant-by-instant comparison between the values of *K,* A_{1Y} e A_{2Y} with respective predetermined thresholds, respectively T₁ for K and T_{A} for A_{1Y} and A_{2Y} and, in the specific case, when the conditions for the sleep mode above mentioned are not verified.

Activating an interrupt flag associated with these comparisons, if the sleep mode conditions are no longer verified, a respective interrupt event is generated by the inertial measurement units and each device resumes operation at full capacity.

This technique based on the activation of an interrupt flag is one of the known techniques for a device/system to exit a sleep mode.

Other known techniques are based on interrupt generation by pressing a button or by receiving data from a serial port.

Moreover, through the monitoring system it is possible to obtain a second index *K*' through which it is possible to establish whether the person (on which the monitoring system is applied) is rotating on itself.

For this purpose, with reference to the slave device 1, said first inertial measurement unit 12 can be configured to acquire at each instant of time *t*, through said first gyroscope 121, a second angular velocity around the axis y V_{1y}, and said first logic control unit 13 can be configured to:
o receive at each instant time *t* from said first inertial measurement unit 12 said second angular velocity about the y axis V_{1y},
o filter at each instant time *t* said second angular velocity about the y axis V_{1y} through said first Mahony filter to eliminate a third offset error associated with the first gyroscope 121, and obtain a further second angular velocity about the y axis V_{1y}' at each instant time *t,*
o send at each instant time *t* the value of said further second angular velocity about the y axis V_{1y}' to said master device 2 through said first wireless transceiver module 11.

Moreover, with reference to the master device 2, said second inertial measurement unit 22 can be configured to acquire, through said second gyroscope 221, a second angular velocity around the axis y V_{2y} at each time instant t and said second logic control unit 23 can be configured to:
o receive at each instant time *t* from said second inertial measurement unit 22 said second angular velocity about the y axis V_{2y},
o filter at each instant time *t* said second angular velocity about the y axis V_{2y}, through said second Mahony filter to eliminate a fourth offset error associated with the second gyroscope 221, and obtain a further second angular velocity about the y axis V_{2y}' at each instant time *t*,
o calculate at each instant time *t* the module of said further second angular velocity about the y axis V_{1y}' associated with the slave device 1, to obtain its absolute value |V_{1y}'|,
o calculate at each instant time t the module of said further second angular velocity about the y axis V_{2y}' associated with the master device 2, to obtain its absolute value |V_{2y}'|,
o calculate at each instant time t a second index K' adding the absolute value of said further second angular velocity about the y axis |V_{1y}'| associated with the slave device 1 in an instant time t and the absolute value of said further second angular velocity about the y axis |V_{2y}'| associated with the master device 2 at the same instant time *t*,

In particular, in the embodiment being described, as already mentioned, said first orientation filter is said first Mahony filter and is configured to eliminate said third offset error through said first set of linear accelerations and said second orientation filter is said second Mahony filter and is configured to eliminate said fourth offset error through said second set of linear accelerations.

Furthermore, said second logic control unit 23 is configured to verify whether at each time instant *t* said second index *K*' is greater than a predetermined third threshold value *T₃,* so as to detect whether said person rotates on itself. In the time instants in which the condition *K*' is greater than said predetermined third threshold value *T₃,* said person rotates on itself.

Furthermore, through the monitoring system it is possible to obtain a third index *K*" through which it is possible to establish whether the person (on which the monitoring system is applied) moves the pelvis on its frontal plane P.

For this purpose, with reference to the slave device 1, the first inertial measurement unit 12 can be configured to acquire, through said first gyroscope 121, a third angular speed around the axis z V_{1z} at each time instant t and the first unit control logic 13 can be configured to:
o receive at each instant time *t* from said first inertial measurement unit 12 said third angular velocity about the z axis V_{1z},
o filter at each instant time *t* said third angular velocity about the z axis V_{1z} through said first Mahony filter to eliminate said fifth offset error associated with the first gyroscope 121, and obtain a further third angular velocity about the z axis V_{1z}' at each instant time t,
o send at each instant time *t* the value of said further third angular velocity about the z axis V_{1z}' to said master device 2 through said first wireless transceiver module 11.

With reference to the master device 2, the second inertial measurement unit 22 can be configured to acquire at each time instant t, through said second gyroscope 221, a third angular velocity around the axis z V_{2z}, and the second logic control unit 23 can be configured to:
o receive at each instant time *t* from said second inertial measurement unit 22 said third angular velocity about the z axis V_{2z},
o filter at each instant time *t* said third angular velocity about the z axis V_{2z}, through said second Mahony filter, to eliminate said sixth offset error associated with the second gyroscope 221, and obtain a further third angular velocity about the y axis V_{2z}' at each instant time *t,*
o calculate at each instant time *t* the module of said further third angular velocity about the z axis V_{1z}' associated with the slave device 1, to obtain its absolute value |V_{1z}'|,
o calculate at each instant time *t* the module of said further third angular velocity about the z axis V_{2z}' associated with the master device 2, to obtain its absolute value |V_{2z}'|,
o calculate at each instant time *t* a third index *K*" adding the absolute value of said further third angular velocity about the z axis |V_{1z}'| associated with the slave device 1 in an instant time *t* and the absolute value of said further third angular velocity about the z axis |V_{2z}'| associated with the master device 2 at the same instant time *t*.

In particular, as already mentioned, said first orientation filter is said first Mahony filter and is configured to eliminate said fifth offset error, through said first set of linear accelerations A₁ₓ,A_{1y},A_{1z}, and said second orientation filter is said second Mahony filter and is configured to eliminate said sixth offset error thorough said second set of linear accelerations A₂ₓ,A_{2y},A_{2z}.

Said second logic control unit 23 is configured to verify whether said third index *K"* at each time instant t is greater than a predetermined fourth threshold value *T₄*, so as to detect whether said person moves the pelvis on its frontal plane P. In the time instants in which the condition K" greater than said predetermined fourth threshold value *T₄* is verified, said person moves the pelvis on its frontal plane P.

The present invention relates also to a method for monitoring the motor activity of a person's lower limbs.

Said method comprises the following steps:
A) acquiring at each instant time t at least a first angular velocity about the x axis V₁ₓ associated with said slave device 1 and a first triad of linear accelerations A₁ₓ,A_{1y},A_{1z} associated with said slave device 1: a first linear acceleration along the x axis A₁ₓ, a second linear acceleration along the y axis A_{1y}, and a third linear acceleration along the z axis A_{1z},
B) filtering at each instant time t said at least one first angular velocity about the x axis V₁ₓ by means of a first orientation filter to eliminate a first offset error associated with the first gyroscope 121, and obtain a further first angular velocity about the x axis V₁ₓ' at each instant time *t*, where said first orientation filter is a first Mahony filter configured to eliminate said first offset error through said first triad of linear accelerations A₁ₓ,A_{1y},A_{1z},
C) acquiring at each instant time *t* at least a first angular velocity about the x axis V₂ₓ associated with said master device 2 and a second triad of linear accelerations A₂ₓ,A_{2y},A_{2z} associated with said master device 2: a first linear acceleration along the x axis A₂ₓ, a second linear acceleration along the y axis A_{2y}, and a third linear acceleration along the z axis A_{2z},
D) filtering at each instant time *t* said at least one first angular velocity about the x axis V₂ₓ by means of a second orientation filter to eliminate a second offset error associated with the second gyroscope 221, and obtaining a further first angular velocity about the x axis V₂ₓ' at each instant time *t*, where said second orientation filter is a second Mahony filter configured to eliminate said second offset error through said second triad of linear accelerations A₂ₓ,A_{2y},A_{2z},
E) calculating at each instant time *t* the module of said further first angular velocity about the x axis V_{1X}' associated with the slave device 1, to obtain an absolute value |V₁ₓ'|,
F) filtering at each instant time *t* said module of said further first angular velocity about the x axis V₁ₓ' associated with the slave device 1 by means of a first low pass filter to obtain an absolute filtered value |V₁ₓ'|_{LP},
G) calculating at each instant time *t* the module of said further first angular velocity about the x axis V₂ₓ' associated with the master device 2, to obtain an absolute value |V₂ₓ'|,
H) filtering at each instant time *t* said module of said further first angular velocity about the x axis V₂ₓ' associated with the master device 2 by means of a second low pass filter to obtain its absolute filtered value |V₂ₓ'|_{LP},
I) calculating at each instant time *t* a first index *K* adding the filtered absolute value of said further first angular velocity about the x axis |V₁ₓ'|_{LP} associated with the slave device 1 in an instant time *t* with the absolute filtered value of said further first angular velocity around the x axis |V₂ₓ'|_{LP} associated with master device 2 at the same instant time *t*.

The step I) of the method comprises some substeps to verify if the person walks with a regular gait or walks with an irregular gait or does not walk.

To this end, the step I) comprises the following substeps:
11) verifying if at each instant time *t* said first index *K* is less than a predetermined first threshold value *T₁*, so as to detect if said person does not walk,
I2) if said first index *K* is greater than said predetermined first threshold value *T₁*, verifying if said first index *K* is between said predetermined first threshold value *T₁* and a predetermined second threshold value *T₂*, greater than said predetermined first threshold value *T₁*, so as to detect whether said person walks with an irregular gait, or if said first index *K* is greater than said predetermined second threshold value *T₂*, so as to detect if said person walks with a regular gait.

According to the invention, said method can comprise some steps to turn to sleep mode each electronic device of the monitoring system.

To this end, the method can comprise the following steps
J) calculating the mean value of the second linear acceleration along the y axis A̅_̅{̅1̅y̅}̅ of said first triad of linear accelerations associated with the slave device 1 in a predetermined first time interval Δt, as well as the mean value of the second linear acceleration along the y axis A̅_̅{̅2̅y̅}̅ of said second triad of linear accelerations associated with the master device 2 in said predetermined first time interval Δt,
K) verifying (after said predetermined first time interval Δt) whether the mean value of the second linear acceleration along the y axis A̅_̅{̅1̅y̅}̅ of said first triad of linear accelerations A₁ₓ,A_{1y},A_{1z} associated with the slave device 1 is greater than a predetermined linear acceleration threshold value T_{A}, so as to detect if the tibia of the first leg of the person is perpendicular to the ground, and whether the mean value of the second linear acceleration along the y axis A̅_̅{̅2̅y̅}̅ of said second triad of linear accelerations A₂ₓ,A_{2y},A_{2z} is greater than said predetermined linear acceleration threshold value T_{A}, so as to detect whether the tibia of the second leg of the person is perpendicular to the ground,
L) turn to sleep mode said slave device 1 and said master device 2 in one of the following two conditions:
   ▪ (first condition) when the mean value of said second linear acceleration along the y axis A̅_̅{̅1̅y̅}̅ of said first triad of linear accelerations A₁ₓ,A_{1y},A_{1z} and the mean value second linear acceleration along the y axis A̅_̅{̅2̅y̅}̅ of said second triad of linear accelerations A₂ₓ,A_{2y},A_{2z} remain greater than said predetermined first linear acceleration threshold value T_{A} for a predetermined second time interval Δt', greater than said predetermined first time interval Δt, and when said first index K remains lower than said predetermined first threshold value T₁ for said predetermined second time interval Δt',
   ▪ (second condition) when the mean value of the second linear acceleration along the y axis A̅_̅{̅1̅y̅}̅ of said first triad of linear accelerations A₁ₓ,A_{1y},A_{1z} is less than said predetermined first linear acceleration threshold value T_{A} and/or the mean value of the second linear acceleration along the y axis A̅_̅{̅2̅y̅}̅ of said second triad of linear accelerations A₂ₓ,A_{2y},A_{2z} is/are less than of said predetermined first linear acceleration threshold value T_{A}, and when said first index K remains lower than said predetermined first threshold value T₁.

According to the invention, through the method, it is possible to obtain at each time instant *t* a second index *K'* by means of which it is possible to establish if the person rotates on itself.

To this end, step A) can comprise the acquisition of a second angular velocity about the y axis V_{1y} associated with said slave device 1 at each instant time *t*, step B) can comprise the filtering of said second angular velocity about the y axis V_{1y} associated with said slave device 1 by means of said first orientation filter to eliminate a third offset error associated with the first gyroscope 121, and obtaining at each instant time a further third angular velocity around the y axis V_{1y}', step C) can comprise the acquisition of a second angular velocity about the y axis V_{2y} associated with said master device 2, step D) can comprise the filtering of said second angular velocity about the y axis V_{2y} associated with said master device 2 by means of a second orientation filter to eliminate a fourth offset error associated with the second gyroscope 221, and obtaining at each instant time *t* a further second angular velocity around the y axis V_{2y}'.

Furthermore, said method can comprise the following steps:
M) calculating at each instant time *t* the module of said further second angular velocity about the y axis V_{1y}' associated with the slave device 1, to obtain its absolute value |V_{1y}'|,
N) calculating at each instant time *t* the module of said further second angular velocity about the y axis V_{2y}' associated with the master device 2, to obtain its absolute value |V_{2y}'|,
O) calculating at each instant time *t* a second index *K*' adding the absolute value of said further third angular velocity about the y axis |V_{1y}'| associated with the slave device 1 in an instant time *t* with the absolute value of said further second angular velocity about the y axis |V_{2y}'| associated with the master device 2, at the same instant time *t*.

In particular, as already said, said first orientation filter is said first Mahony filter and is configured to eliminate said third offset error through the first triad of linear accelerations A₁ₓ,A_{1y},A_{1z},, and said second orientation filter is said second Mahony filter configured to eliminate said fourth error offset through said second triad of linear accelerations A₂ₓ,A_{2y},A_{2z}.

It is preferable that the step O) comprises a substep O1), i.e. the substep of verifying if said second index *K*' is greater than a predetermined third threshold value *T₃*, so as to detect if said person rotates on itself.

According to the invention, through the method, it is possible to obtain a third index *K"* by means of which it is possible to establish if the person moves the pelvis on its frontal plane P.

To this end, step A) can comprise the acquisition of a third angular velocity about the z axis V_{1z} associated with said slave device 1 at each instant time *t*, step B) can comprise the filtering of said third angular velocity about the z axis V_{1z} associated with said slave device 1 by means of said first orientation filter to eliminate a fifth offset error associated with the first gyroscope 121, and obtaining at each instant time *t* a further third angular velocity around the z axis V_{1z}', step C) can comprise the acquisition of a third angular velocity about the z axis V_{2z} associated with said master device 2 at each instant time *t*, step D) can comprise the filtering of said third angular velocity about the z axis V_{2z} associated with said master device 2 by means of said second orientation filter to eliminate a sixth offset error associated with the second gyroscope 221, and obtaining a further third angular velocity around the z axis V_{2z}'.

Furthermore, said method can comprise the following steps:
P) calculating at each instant time *t* the module of said further third angular velocity about the z axis V_{1Z}' associated with the slave device 1, to obtain its absolute value |V_{1Z}'|,
Q) calculating at each instant time *t* the module of said further third angular velocity about the z axis V₂z' associated with the master device 2, to obtain its absolute value |V_{2Z}'|,
R) calculating at each instant time *t* a third index *K*" adding the absolute value of said further third angular velocity about the z axis |V_{1Z}'| associated with the slave device 1 in an instant time *t* with the absolute value of said further third angular velocity about the z axis |V_{2Z}'| associated with the master device 2 at the same instant time *t*.

In particular, as already said, said first orientation is said first Mahony filter and is configured to eliminate said fifth offset error through said first triad of linear acceleration A₁ₓ,A_{1y},A_{1z}, and said second orientation filter is said second Mahony filter and is configured to eliminate said sixth offset error through said second triad of linear accelerations A₂ₓ,A_{2y},A_{2z}.

It is preferable that step R) comprises a substep R1), i.e. the substep of verifying if said third index *K*" is greater than a predetermined fourth threshold value *T₄*, so as to detect if said person moves the pelvis on its frontal plane P.

### Advantages

Advantageously, from the above description, by means of the system and method, object of the invention, it is possible to obtain at least a first index *K* and preferably further indices, such as for example the second index *K*' and/or the third index *K*", by means of which it is possible to obtain information on the physical activity of the person over time, without the need for the presence of an external processing unit.

Accordingly, both the system and the method require only the presence of two electronic devices, i.e. a master device and a slave device, which communicate with each other, in which only the master device is conceived to process data.

A second advantage is given by the fact that each electronic device of the monitoring system does not need to be connected to an electrical network to operate, since each electronic device is provided with respective supply power means.

A further advantage is given by the possibility of putting each electronic device on stand by so that each electronic device has a reduced energy consumption and has a longer duration in time.

The present invention has been described for illustrative, but not limitative purposes with reference to its preferred embodiments, but it well evident that one skilled in the art can introduce variants and/or modifications to the same, without departing from the relevant scope as defined in the enclosed claims.

## Claims

1. Monitoring system to monitor the motor activity of a person's lower limbs, said system comprising:
- a first electronic device which is a slave device (1) and a second electronic device which is a master device (2), to be positioned, in use, respectively on a portion of a first leg and on a portion of a second leg, where
said slave device (1) comprises inside:
- first supplying means (14) for supplying power to said slave device (1);
- a first wireless transceiver module (11) for transmitting and receiving data to/from said master device (2),
- a first inertial measurement unit (12), comprising a first gyroscope (121) and a first accelerometer (122), configured to:
o acquire at each time instant *t*, through said first gyroscope (121), at least one first angular velocity being an angular velocity about the x axis (V₁ₓ), and
o acquire at each time instant *t*, through said first accelerometer (122), a first triad of linear accelerations (A₁ₓ,A_{1y},A_{1z}): a first linear acceleration along the x axis (A₁ₓ), a second linear acceleration along the y axis (A_{1y}), and a third linear acceleration along the z axis (A_{1z}),
- a first logic control unit (13), connected to said first inertial measurement unit (12) and to said first wireless transceiver module (11), and configured to:
o receive at each instant time *t* from said first inertial measurement unit (12) said at least one first angular velocity about the x axis (V₁ₓ) and said first triad of linear accelerations (A₁ₓ,A_{1y},A_{1z}),
o filter at each instant time *t* said angular velocity about the x axis (V₁ₓ) by means of a first orientation filter to eliminate a first offset error associated with the first gyroscope (121), and obtain a further angular velocity about the x axis (V₁ₓ') at each instant time *t*, where said first orientation filter is a first Mahony filter configured to eliminate said first offset error through said first triad of linear accelerations (A₁ₓ,A_{1y},A_{1z}),
o transmit at each instant time *t* the value of said further angular velocity about the axis x (V₁ₓ') to said master device (2) through said first wireless transceiver module (11),
said master device (2) comprises inside:
- second supplying means (24) for supplying power to said master device (2),
- a second wireless transceiver module (21) for transmitting and receiving data to/from said slave device (1),
- a second inertial measurement unit (22), comprising a second gyroscope (221) and a second accelerometer (222), configured to:
o acquire at each instant time *t* through said second gyroscope (221) at least one first angular velocity being an angular velocity about the x axis (V₂ₓ),
o acquire at each instant time *t*, through said second accelerometer (222), a second triad of linear accelerations (A₂ₓ,A_{2y},A_{2z}): a first linear acceleration along the x axis (A₂ₓ), a second linear acceleration along the y axis (A_{2y}), and a third linear acceleration along the z axis (A_{2z}),
- a second logic control unit (23), connected to said second inertial measurement unit (22) and to said second wireless transceiver module (21), and configured to:
o receive at each instant time *t* from said second inertial measurement unit (22) said angular velocity about the x axis (V₂ₓ) and said second triad of linear accelerations (A₂ₓ,A_{2y},A_{2z}),
o filter at each instant time *t* said angular velocity about the x axis (V₂ₓ) by means of a second orientation filter to eliminate a second offset error associated with the second gyroscope (221), and obtain a further angular velocity about the x axis (V₂ₓ') at each instant time *t*, where said second orientation filter is a second Mahony filter configured to eliminate said second offset error through said second triad of linear accelerations (A₂ₓ,A_{2y},A_{2z}),
o calculate at each instant time t the module of said further angular velocity about the x axis (V₁ₓ'), associated with the slave device (1), to obtain its absolute value (|V₁ₓ'|),
o filter at each instant time *t* said absolute value of said further angular velocity about the x axis (|V₁ₓ'|) associated with the slave device (1) by means of a first low pass filter, to obtain an absolute filtered value (|V₁ₓ'|_{LP}) at each instant time *t*,
o calculate at each instant time *t* the module of said further angular velocity about the x axis (V₂ₓ') associated with the master device (2), to obtain its absolute value (|V₂ₓ'|),
o filter at each instant time *t* said absolute value of said further angular velocity about the x axis (|V₂ₓ'|) associated with the master device (2) by means of a second low pass filter, to obtain an absolute filtered value (|V2x'|LP) at each instant time *t*,
o calculate at each instant time *t* a first index *K* adding the filtered absolute value of said further angular velocity about the x axis (|V₁ₓ'|_{LP}) associated with the slave device (1) in an instant time *t* and the absolute filtered value of said further angular velocity about the x axis (|V₂ₓ'|_{LP}) associated with the master device (2) at the same instant time t,
o verify at each instant time *t* if said first index *K* is less than a predetermined first threshold value *T1,* so as to detect if said person does not walk,
o if said first index *K* is greater than said predetermined first threshold value *T₁*, verify if said first index K is between said predetermined first threshold value *T₁* and a predetermined second threshold value *T₂*, greater than said predetermined first threshold value *T₁*, so as to detect if said person walks with an irregular gait, or if said first index K is greater than said predetermined second threshold value *T₂*, so as to detect if said person walks with a regular gait.

2. Monitoring system according to the previous claim, **characterized in that**
said first logic control unit (13) is configured to:
o calculate the mean value of the second linear acceleration along the y axis ( A̅_̅{̅1̅y̅}̅ ) of said first triad of linear accelerations associated with the slave device (1) in a predetermined first time interval Δt,
o verify whether the mean value of the second linear acceleration along the y axis ( A̅_̅{̅1̅y̅}̅ ) of said first triad of linear accelerations (A₁ₓ,A_{1y},A_{1z}) associated with the slave device (1) is greater than a predetermined linear acceleration threshold value T_{A}, so as to detect if the tibia of the person's first leg is perpendicular to the ground,
o send the result of the verification referred to the mean value of said second linear acceleration along the y axis ( A̅_̅{̅1̅y̅}̅ ) of said first triad of linear accelerations (A₁ₓ,A_{1y},A_{1z}) to the master device (2), through the first wireless transceiver module (11) of said slave device (1),
**in that**
said second logic control unit (23) is configured to:
o receive the result of the verification referred to the mean value of said second linear acceleration along the y axis ( A̅_̅{̅1̅y̅}̅ ) of said first triad of linear accelerations (A₁ₓ,A_{1y},A_{1z}),
o calculate the mean value of the second linear acceleration along the y axis ( A̅_̅{̅2̅y̅}̅ ) of said second triad of linear accelerations associated with the master device (2) in said predetermined first time interval Δt,
o verify whether the mean value of the second linear acceleration along the y axis ( A̅_̅{̅2̅y̅}̅ ) of said second triad of linear accelerations (A₂ₓ,A_{2y},A_{2z}) is greater than said predetermined linear acceleration threshold value T_{A}, so as to detect whether the tibia of the person's second leg is perpendicular to the ground,
o turn to sleep mode said slave device (1) and said master device (2) in one of the following two conditions:
▪ when said mean value of said second linear acceleration along the y axis ( A̅_̅{̅1̅y̅}̅ ) of said first triad of linear accelerations (A₁ₓ,A_{1y},A_{1z}) and said mean value of said second linear acceleration along the y axis ( A̅_̅{̅2̅y̅}̅ ) of said second triad of linear accelerations (A₂ₓ,A_{2y},A_{2z}) remain greater than said predetermined first linear acceleration threshold value T_{A} for a predetermined second time interval Δt', greater than said predetermined first time interval Δt, and when said first index *K* remains lower than said predetermined first threshold value *T₁* for a predetermined second time interval Δt',
▪ when the mean value of the second linear acceleration along the y axis ( A̅_̅{̅1̅y̅}̅ ) of said first triad of linear accelerations (A₁ₓ,A_{1y},A_{1z}) is less than said predetermined first linear acceleration threshold value T_{A} and/or the mean value of the second linear acceleration along the y axis ( A̅_̅{̅2̅y̅}̅ ) of said second triad of linear accelerations (A₂ₓ,A_{2y},A_{2z}) is/are less than of said predetermined first linear acceleration threshold value T_{A} and when said first index *K* remains lower than said predetermined first threshold value *T₁*.

3. Monitoring system according to any one of previous claims, **characterized in that**
said first inertial measurement unit (12) is configured to acquire at each instant time *t* a second angular velocity being an angular velocity about the y axis (V_{1y}) by means of said first gyroscope (121),
**in that**
said first logic control unit (13) is configured to:
o receive at each instant time *t* from said first inertial measurement unit (12) said angular velocity about the y axis (V_{1y}),
o filter at each instant time *t* said angular velocity about the y axis (V_{1y}) through said first Mahony filter to eliminate a third offset error associated with the first gyroscope (121) through said first triad of linear accelerations (A₁ₓ,A_{1y},A_{1z}), and obtain a further angular velocity about the y axis (V_{1y}') at each instant time *t,*
o send at each instant time *t* the value of said further angular velocity about the y axis (V_{1y}') to said master device (2) through said first wireless transceiver module (11),
**in that**
said second inertial measurement unit (22) is configured to acquire at each instant time *t* a second angular velocity being an angular velocity about the y axis (V_{2y}) by means of said second gyroscope (221),
**in that**
said second logic control unit (23) is configured to:
o receive at each instant time t from said second inertial measurement unit (22) said angular velocity about the y axis (V_{2y}),
o filter at each instant time *t* said angular velocity about the y axis (V_{2y}), by means of said second Mahony filter to eliminate a fourth offset error associated with the second gyroscope (221), and obtain a further angular velocity about the y axis (V_{2y}') at each instant time *t,*
o calculate at each instant time *t* the module of said further angular velocity about the y axis (V_{1y}') associated with the slave device (1), to obtain its absolute value (|V_{1y}'|),
o calculate at each instant time t the module of said further angular velocity about the y axis (V_{2y}') associated with the master device (2), to obtain its absolute value (|V_{2y}'|),
o calculate at each instant time *t* a second index *K*' adding the absolute value of said further angular velocity about the y axis (|V_{1y}'|) associated with the slave device (1) in an instant time *t* and the absolute value of said further angular velocity about the y axis (|V_{2y}'|) associated with the master device (2) at the same instant time *t*,
o verify at each instant time *t* if said second index *K*' is greater than a predetermined third threshold value *T₃*, so as to detect if said person rotates on itself.

4. Monitoring system according to any one of previous claims,
**characterized in that**
said first inertial measurement unit (12) is configured to acquire at each instant time *t* a third angular velocity being an angular velocity about the z axis (V_{1z}) by means of said first gyroscope (121),
**in that**
said first logic control unit (13) is configured to:
o receive at each instant time *t* from said first inertial measurement unit (12) said angular velocity about the z axis (V_{1z}),
o filter at each instant time *t* said angular velocity about the z axis (V_{1z}) through said first Mahony filter to eliminate said fifth offset error associated with the first gyroscope (121) through said first triad of linear accelerations (A₁ₓ,A_{1y},A_{1z}), and obtain a further angular velocity about the z axis (V_{1z}') at each instant time *t*,
o send at each instant time t the value of said further angular velocity about the z axis (V_{1z}') to said master device (2) through said first wireless transceiver module (11),
**in that**
said second inertial measurement unit (22) is configured to acquire at each instant time *t* a third angular velocity being an angular velocity around the z axis (V_{2z}) by means of said second gyroscope (221),
**in that**
said second logic control unit (23) is configured to:
o receive at each instant time *t* from said second inertial measurement unit (22) said angular velocity about the z axis (V_{2z}),
o filter at each instant time *t* said angular velocity about the z axis (V_{2z}), by means of said second Mahony filter, to eliminate said sixth offset error associated with the second gyroscope (221) through said second of triad of linear accelerations (A₂ₓ,A_{2y},A_{2z}), and obtain a further angular velocity about the z axis (V_{2z}') at each instant time *t*,
o calculate at each instant time *t* the module of said further angular velocity about the z axis (V_{1z}') associated with the slave device (1), to obtain its absolute value (|V_{1z}'|),
o calculate at each instant time *t* the module of said further angular velocity about the z axis (V_{2z}') associated with the master device (2), to obtain its absolute value (|V_{2z}'|),
o calculate at each instant time *t* a third index *K*" adding the absolute value of said further angular velocity about the z axis (|V_{1z}'|) associated with the slave device (1) in an instant time *t* and the absolute value of said further angular velocity about the z axis (|V_{2z}'|) associated with the master device (2) at the same instant time *t*,
o verify at each instant time *t* if said third index *K*" is greater than a predetermined fourth threshold value T₄, so as to detect if said person moves the pelvis on its frontal plane (P).

5. Monitoring system according to any one of the previous claims, **characterized in that** said first low-pass filter has a cut-off frequency of between 0,83Hz and 2,7Hz, and said second low-pass filter has a cutting frequency comprised between 0,83Hz and 2,7Hz

6. Monitoring system according to any one of the previous claims, **characterized in that** said first low pass filter coincides with said second low pass filter.

7. Monitoring system according to any one of the previous claims, **characterized in that** said master device (2) comprises storage means (25) for storing data, where said storage means (25) are connected to said second control logic unit (23).

8. Method for monitoring the motor activity of a person's lower limbs by means of a monitoring system according to any one of the previous claims, said method comprising the following steps:
A) acquiring at each instant time *t* an angular velocity about the x axis (V₁ₓ) associated with said slave device (1) and a first triad of linear accelerations (A₁ₓ,A_{1y},A_{1z}) associated with said slave device (1): a first linear acceleration along the x axis (A₁ₓ), a second linear acceleration along the y axis (A_{1y}), and a third linear acceleration along the z axis (A_{1z}),
B) filtering at each instant time *t* said angular velocity about the x axis (V₁ₓ) by means of a first orientation filter to eliminate a first offset error associated with the first gyroscope (121), and obtain a further angular velocity about the x axis (V₁ₓ') at each instant time *t*, where said first orientation filter is a first Mahony filter configured to eliminate said first offset error through said first triad of linear accelerations (A₁ₓ,A_{1y},A_{1z}),
C) acquiring at each instant time *t* at least an angular velocity about the x axis (V₂ₓ) associated with said master device (2) and a second triad of linear accelerations (A₂ₓ,A_{2y},A_{2z}) associated with said master device (2): a first linear acceleration along the x axis (A₂ₓ), a second linear acceleration along the y axis (A_{2y}), and a third linear acceleration along the z axis (A_{2z}),
D) filtering at each instant time *t* said angular velocity about the x axis (V₂ₓ) by means of a second orientation filter to eliminate a second offset error associated with the second gyroscope (221), and obtaining a further angular velocity about the x axis (V₂ₓ') at each instant time *t*, where said second orientation filter is a second Mahony filter configured to eliminate said second offset error through said second triad of linear accelerations (A₂ₓ,A_{2y},A_{2z}),
E) calculating at each instant time *t* the module of said further angular velocity about the x axis (V_{1X}') associated with the slave device (1), to obtain an absolute value (|V₁ₓ'|),
F) filtering at each instant time t said module of said further angular velocity about the x axis (V₁ₓ') associated with the slave device (1) by means of a first low pass filter to obtain an absolute filtered value (|V₁ₓ'|_{LP}),
G) calculating at each instant time *t* the module of said further angular velocity about the x axis (V₂ₓ') associated with the master device (2), to obtain an absolute value (|V₂ₓ'|),
H) filtering at each instant time *t* said module of said further angular velocity about the x axis (V₂ₓ') associated with the master device (2) by means of a second low pass filter to obtain its absolute filtered value (|V₂ₓ'|_{LP}),
I) calculating at each instant time *t* a first index *K* adding the filtered absolute value of said further angular velocity about the x axis (|V₁ₓ'|_{LP}) associated with the slave device (1) in an instant time *t* with the absolute filtered value of said further angular velocity around the x axis (|V₂ₓ'|_{LP}) associated with master device (2) at the same instant time *t*,
where said step I) comprises the following substeps:
11) verifying if at each instant time *t* said first index *K* is less than a predetermined first threshold value *T₁*, so as to detect if said person does not walk,
I2) if said first index *K* is greater than said predetermined first threshold value *T₁*, verifying if said first index *K* is between said predetermined first threshold value *T₁* and a predetermined second threshold value *T₂*, greater than said predetermined first threshold value *T₁*, so as to detect whether said person walks with an irregular gait, or if said first index *K* is greater than said predetermined second threshold value *T₂*, so as to detect if said person walks with a regular gait.

9. Method according to the previous claim, **characterized in that** said method comprises the following steps:
J) calculating the mean value of the second linear acceleration along the y axis ( A̅_̅{̅1̅y̅}̅ ) of said first triad of linear accelerations associated with the slave device (1) in a predetermined first time interval Δt, as well as the mean value of the second linear acceleration along the y axis ( A̅_̅{̅2̅y̅}̅ ) of said second triad of linear accelerations associated with the master device (2) in said predetermined first time interval Δt,
K) verifying whether the mean value of the second linear acceleration along the y axis ( A̅_̅{̅1̅y̅}̅ ) of said first triad of linear accelerations (A₁ₓ,A_{1y},A_{1z}) associated with the slave device (1) is greater than a predetermined linear acceleration threshold value T_{A}, so as to detect if the tibia of the first leg of the person is perpendicular to the ground, and whether the mean value of the second linear acceleration along the y axis ( A̅_̅{̅2̅y̅}̅ ) of said second triad of linear accelerations (A₂ₓ,A_{2y},A_{2z}) is greater than said predetermined linear acceleration threshold value T_{A}, so as to detect whether the tibia of the second leg of the person is perpendicular to the ground,
L) turning to sleep mode said slave device (1) and said master device (2) in one of the following two conditions:
▪ when said mean value of said second linear acceleration along the y axis ( A̅_̅{̅1̅y̅}̅ ) of said first triad of linear accelerations (A₁ₓ,A_{1y},A_{1z}) and said second linear acceleration along the y axis ( A̅_̅{̅2̅y̅}̅ ) of said second triad of linear accelerations (A₂ₓ,A_{2y},A_{2z}) remain greater than said predetermined first linear acceleration threshold value T_{A} for a predetermined second time interval Δt', greater than said predetermined first time interval Δt, and when said first index *K* remains lower than said predetermined first threshold value T₁ for said predetermined second time interval Δt',
▪ when the mean value of the second linear acceleration along the y axis ( A̅_̅{̅1̅y̅}̅ ) of said first triad of linear accelerations (A₁ₓ,A_{1y},A_{1z}) is less than said predetermined first linear acceleration threshold value T_{A} and/or the mean value of the second linear acceleration along the y axis ( A̅_̅{̅2̅y̅}̅ ) of said second triad of linear accelerations (A₂ₓ,A_{2y},A_{2z}) is/are less than of said predetermined first linear acceleration threshold value T_{A}, and when said first index K remains lower than said predetermined first threshold value T₁.

10. Method according to any one of claims 8 or 9, **characterized in that**:
step A) comprises the acquisition at each instant time t of an angular velocity about the y axis (V_{1y}) associated with said slave device (1),
step B) comprises the filtering at each instant time *t* of said angular velocity about the y axis (V_{1y}) associated with said slave device (1) by means of said first Mahony filter to eliminate a third offset error associated with the first gyroscope (121) through said first triad of linear accelerations (A₁ₓ,A_{1y},A_{1z}), and obtaining at each instant time a further third angular velocity around the y axis (V_{1y}'),
step C) comprises the acquisition at each instant time t of an angular velocity about the y axis (V_{2y}) associated with said master device (2),
step D) comprises the filtering at each instant time of said angular velocity about the y axis (V_{2y}) associated with said master device (2) by means of said second Mahony filter to eliminate a fourth offset error associated with the second gyroscope (221) through said second triad of linear accelerations (A₂ₓ,A_{2y},A_{2z}), and obtaining at each instant time t a further angular velocity around the y axis (V_{2y}'),
**in that**
said method comprises the following steps:
M) calculating at each instant time *t* the module of said further angular velocity about the y axis (V_{1y}') associated with the slave device (1), to obtain its absolute value (|V_{1y}'|),
N) calculating at each instant time t the module of said further angular velocity about the y axis (V_{2y}') associated with the master device (2), to obtain its absolute value (|V_{2y}'|),
O) calculating at each instant time *t* a second index *K*' adding the absolute value of said further angular velocity about the y axis (|V_{1y}'|) associated with the slave device (1) in an instant time *t* with the absolute value of said further angular velocity about the y axis (|V_{2y}'|) associated with the master device (2), at the same instant time *t*,
where said step O) comprises the following substep:
O1) verifying at each instant time *t* if said second index *K*' is greater than a predetermined third threshold value *T₃*, so as to detect if said person rotates on itself.

11. Method according to any one of claims 8-10, **characterized in that**
step A) comprises the acquisition at each instant time *t* of an angular velocity about the z axis (V_{1z}) associated with said slave device (1),
step B) comprises the filtering at each instant time *t* of said angular velocity about the z axis (V_{1z}) associated with said slave device (1) by means of said first Mahony filter to eliminate a fifth offset error associated with the first gyroscope (121) through said first triad of linear accelerations (A₁ₓ,A_{1y},A_{1z}), and obtaining at each instant time *t* a further angular velocity around the z axis (V_{1z}'),
step C) comprises the acquisition at each instant time *t* of an angular velocity about the z axis (V_{2z}) associated with said master device (2),
step D) comprises the filtering at each instant time *t* of said angular velocity about the z axis (V_{2z}) associated with said master device (2) by means of said second Mahony filter to eliminate a sixth offset error associated with the second gyroscope (221) through said second triad of linear accelerations (A₂ₓ,A_{2y},A_{2z}), and obtaining at each instant time t a further angular velocity around the z axis (V_{2z}'),
**in that**
said method comprises the following steps:
P) calculating at each instant time *t* the module of said further angular velocity about the z axis (V_{1Z}') associated with the slave device (1), to obtain its absolute value (|V_{1Z}'|),
Q) calculating at each instant time *t* the module of said further angular velocity about the z axis (V₂z') associated with the master device (2), to obtain its absolute value (|V_{2Z}'|),
R) calculating at each instant time *t* a third index K" adding the absolute value of said further angular velocity about the z axis (|V_{1Z}'|) associated with the slave device (1) in an instant time *t* with the absolute value of said further angular velocity about the z axis (|V_{2Z}'|) associated with the master device (2) at the same instant time *t*,
where said step R) comprises the following substep:
R1) verifying if said third index *K*" is greater than a predetermined fourth threshold value *T₄*, so as to detect if said person moves the pelvis on its frontal plane (P).

## Patentansprüche

1. Überwachungssystem zur Überwachung der motorischen Aktivität der unteren Gliedmaßen einer Person, das besagte System umfasst:
- ein erstes elektronisches Gerät, das ein Slave-Gerät (1) ist, und ein zweites elektronisches Gerät, das ein Master-Gerät (2) ist, und im Betrieb sollen diese jeweils auf einem Teil eines ersten Beins und auf einem Teil eines zweiten Beins positioniert werden, wobei das besagte Slave-Gerät (1) im Inneren umfasst:
- erste Versorgungsmittel (14) zur Stromversorgung des besagten Slave-Geräts (1);
- ein erstes drahtloses Transceivermodul (11) zum Senden und Empfangen von Daten zu/von dem Master-Gerät (2),
- eine erste Trägheitsmesseinheit (12), umfassend ein erstes Gyroskop (121) und einen ersten Beschleunigungsmesser (122), der konfiguriert ist, um:
o zu jedem Zeitpunkt t durch das besagte erste Gyroskop (121) mindestens eine erste Winkelgeschwindigkeit zu erfassen, die eine Winkelgeschwindigkeit um die x-Achse (V₁ₓ) ist, und
o zu jedem Zeitpunkt t durch den besagten ersten Beschleunigungsmesser (122) zu erfassen, eine erste Triade linearer Beschleunigungen (A₁ₓ, A_{1y}, A_{1z}): Eine erste lineare Beschleunigung entlang der x-Achse (A₁ₓ), eine zweite lineare Beschleunigung entlang der y-Achse (A_{1y}) und eine dritte lineare Beschleunigung entlang der z-Achse (A_{1z}),
- eine erste logische Steuereinheit (13), die mit der besagten ersten Trägheitsmessungs-Einheit (12) und dem besagten ersten drahtlosen Transceivermodul (11) verbunden und konfiguriert ist, um:
o zu jedem Zeitpunkt t von der ersten Trägheitsmesseinheit (12) besagte mindestens eine erste Winkelgeschwindigkeit um die x-Achse (V₁ₓ) und besagte erste Triade linearer Beschleunigungen (A₁ₓ, A_{1y}, A_{1z}) zu empfangen,
o Filtern, zu jedem Zeitpunkt t, der besagten Winkelgeschwindigkeit um die x-Achse (V₁ₓ) mittels eines ersten Orientierungsfilters zur Eliminierung eines ersten Versatzfehlers, der dem ersten Gyroskop (121) zugeordnet ist, und zu jedem Zeitpunkt t eine weitere Winkelgeschwindigkeit um die x-Achse (V₁ₓ') zu erhalten, wobei der besagte erste Orientierungsfilter ein erster Mahony-Filter ist, der dazu konfiguriert ist, den besagten ersten Versatzfehler durch die besagte erste Triade von linearen Beschleunigungen (A₁ₓ, A_{1y}, A_{1z}) zu beseitigen,
o zu jedem Zeitpunkt t den Wert der besagten weiteren Winkelgeschwindigkeit um die x-Achse (V₁ₓ') zum besagten Master-Gerät (2) durch besagtes erstes drahtloses Transceivermodul (11) zu übertragen, das besagte Master-Gerät (2) enthält im Inneren:
- zweite Versorgungsmittel (24) zur Stromversorgung des besagten Master-Geräts (2),
- ein zweites drahtloses Transceivermodul (21) zum Senden und Empfangen von Daten zu/von dem besagten Slave-Gerät (1),
- eine zweite Trägheitsmesseinheit (22), umfassend ein zweites Gyroskop (221) und einen zweiten Beschleunigungsmesser (222), konfiguriert, um:
o zu jedem Zeitpunkt t durch das besagte zweite Gyroskop (221) mindestens eine erste Winkelgeschwindigkeit zu erfassen, die eine Winkelgeschwindigkeit um die x-Achse (V₂ₓ) ist,
o zu jedem Zeitpunkt t, durch den besagten zweiten Beschleunigungsmesser zu erfassen (222), eine zweite Triade linearer Beschleunigungen (A_{2x,} A_{2y}, A_{2z}): Eine erste lineare Beschleunigung entlang der x-Achse (A₂ₓ), eine zweite lineare Beschleunigung entlang der y-Achse (A_{2y}) und eine dritte lineare Beschleunigung entlang der z-Achse (A_{2z}),
- eine zweite logische Steuereinheit (23), die mit der besagten zweiten Trägheits-Messeinheit (22) und dem zweiten drahtlosen Transceivermodul (21) verbunden und konfiguriert ist zum:
o Empfangen, zu jedem Zeitpunkt t, von der besagten zweiten Trägheitsmess-Einheit (22) der besagten Winkelgeschwindigkeit um die x-Achse (V₂ₓ) und der besagten zweiten Triade linearer Beschleunigungen (A₂ₓ, A_{2y}, A_{2z});
o Filtern, zu jedem Zeitpunkt t, der besagten Winkelgeschwindigkeit um die x-Achse (V₂ₓ) mittels eines zweiten Orientierungsfilters, um einen zweiten Versatzfehler im Zusammenhang mit dem zweiten Gyroskop (221) zu beseitigen und eine weitere Winkelgeschwindigkeit um die x-Achse (V₂ₓ') zu jedem Zeitpunkt t zu erhalten, wobei der besagte zweite Orientierungsfilter ein zweiter Mahony-Filter ist, konfiguriert, um den zweiten Versatzfehler durch die besagte zweite Triade linearer Beschleunigungen (A₂ₓ, A_{2y}, A_{2z}) zu beseitigen,
o Berechnen, zu jedem Zeitpunkt t, des Moduls der besagten weiteren Winkel-Geschwindigkeit um die x-Achse (V₁ₓ'), die dem Slave-Gerät (1) zugeordnet ist, um seinen absoluten Wert (|V₁ₓ'|) zu erhalten,
o Filtern, zu jedem Zeitpunkt t, des Absolutwerts der besagten weiteren Winkel-Geschwindigkeit um die x-Achse (|V₁ₓ'), die dem Slave-Gerät (1) zugeordnet ist, mittels eines ersten Tiefpassfilters, um einen absolut gefilterten Wert (|V₁ₓ'|_{LP}) zu jedem Zeitpunkt t zu erhalten,
o Empfangen, zu jedem Zeitpunkt t, des Moduls der besagten weiteren Winkel-Geschwindigkeit um die x-Achse (V₂ₓ), die dem Master-Gerät (2) zugeordnet ist, um seinen absoluten Wert (|V₂ₓ'I) zu erhalten,
o Filtern, zu jedem Zeitpunkt t, des besagten Absolutwerts der besagten weiteren Winkelgeschwindigkeit um die x-Achse (|V₂ₓ'I), die dem Master-Gerät zugeordnet ist, mittels eines zweiten Tiefpassfilters, um einen absolut gefilterten Wert
(|V₂ₓ'|_{LP}) zu jedem Zeitpunkt t zu erhalten,
o Berechnen, zu jedem Zeitpunkt t, eines ersten Index K, der die gefilterten Absolutwerte dieser besagten weiteren Winkelgeschwindigkeit um die x-Achse
(|V_{1X}'|_{LP}) hinzurechnet, die dem Slave-Gerät (1) in einem Zeitpunkt t zugeordnet ist, und des absoluten gefilterten Wertes der besagten weiteren Winkelgeschwindigkeit um die x-Achse (|V_{2X}'I _{LP}), die gleichzeitig dem Master-Gerät (2) in demselben Zeitpunkt t zugeordnet ist,
o Überprüfen, zu jedem Zeitpunkt t, ob der besagte erste Index K kleiner ist als ein vorgegebener erster Schwellenwert *T1,* um zu erkennen, ob die besagte Person nicht geht,
o Wenn der erste Index K größer ist als der besagte vorgegebene erste Schwellenwert *T1,* überprüfen, ob der erste Index K zwischen dem besagten vorgegebenen ersten Schwellenwert T₁ und einem vorgegebenen zweiten Schwellenwert *T₂* liegt, der größer ist als der vorgegebene erste Schwellenwert *T₁,* so dass man erkennen kann, ob die Person einen unregelmäßigen Gang hat, oder ob der besagte erste Index K größer ist als der vorgegebene zweite Schwellenwert *T₂*, und so festzustellen, ob die Person mit einem regelmäßigen Gang geht.

2. Überwachungssystem nach dem vorherigen Anspruch, **dadurch gekennzeichnet,**
**dass** die erste Logiksteuereinheit (13) konfiguriert ist zum:
o Berechnen des Mittelwerts der zweiten linearen Beschleunigung entlang der y-Achse (*̅A̅*̅_̅{̅1̅*̅y̅*̅}̅) der besagten ersten Triade der linearen Beschleunigungen, die dem Slave-Gerät (1) zugeordnet ist, in einem vorgegebenen ersten Zeitintervall Δt,
o Überprüfen, ob der Mittelwert der zweiten linearen Beschleunigung entlang der y-Achse entlang der y-Achse (*̅A̅*̅_̅{̅1̅*̅y̅*̅}̅) der ersten Triade linearer Beschleunigungen (A₁ₓ, A_{1y}, A_{1z}), die dem Slave-Gerät (1) zugeordnet ist, größer ist als ein vorgegebener linearer Beschleunigungsschwellenwert T_{A}, so dass man erkennt, ob das Schienbein des ersten Beins der Person senkrecht zum Boden steht,
o Senden des Ergebnisses der Überprüfung bezogen auf den Mittelwert der besagten linearen Beschleunigung entlang der y-Achse (*̅A̅*̅_̅{̅1̅*̅y̅*̅}̅) entlang der besagten ersten Triade von linearen Beschleunigungen (A₁ₓ, A_{1y}, A_{1z})an das Mastergerät (2), durch das erste drahtlose Transceivermodul (11) des Slave-Geräts (1),
indem, dass die besagt erste Logiksteuereinheit (23) konfiguriert ist zum:
o Empfangen des Ergebnisses der Überprüfung bezogen auf den Mittelwert der besagten linearen Beschleunigung entlang der y-Achse (*̅A̅*̅_̅{̅1̅*̅y̅*̅}̅) entlang der besagten ersten Triade von linearen Beschleunigungen (A₁ₓ, A_{1y}, A_{1z}),
o Berechnen des Mittelwerts der zweiten linearen Beschleunigung entlang der y-Achse (*̅A̅*̅_̅{̅2̅*̅y̅*̅}̅) der besagten zweiten Triade der linearen Beschleunigungen, die dem Slave-Gerät (2) zugeordnet ist, im besagten vorgegebenen ersten Zeitintervall Δt,
o Überprüfen, ob der Mittelwert der zweiten linearen Beschleunigung entlang der y-Achse (*̅A̅*̅_̅{̅2̅*̅y̅*̅}̅) der besagten zweiten Triade linearer Beschleunigungen größer ist als der vorgegebene lineare Beschleunigungs-Schwellenwert T_{A}, um zu erkennen, ob das Schienbein des zweiten Beins der Person senkrecht zum Boden steht,
o Versetzen des besagten Slave-Geräts (1) und des besagten Master-Geräts (2) in den Schlafmodus in einer der folgenden zwei Bedingungen:
• wenn der besagte Mittelwert der besagten zweiten linearen Beschleunigung entlang der y-Achse (*̅A̅*̅_̅{̅1̅*̅y̅*̅}̅) der besagten ersten Triade von linearen Beschleunigungen (A₁ₓ, A_{1y}, A_{1z})und des besagten Mittelwerts besagt zweiten linearen Beschleunigung entlang der y-Achse (*̅A̅*̅_̅{̅2̅*̅y̅*̅}̅) der besagten zweiten Triade linearer Beschleunigungen (A₂ₓ, A_{2y}, A_{2z}) größer bleiben als der vorgegebene erste lineare Beschleunigungs-Schwellenwert T_{A} für ein vorgegebenes zweites Zeitintervall Δt' größer als das besagte vorgegebene erste Zeitintervall Δt ist, und wenn der besagte erste Index K niedriger bleibt als der besagte vorgegebene erste Schwellenwert *T₁* für ein vorgegebenes zweites Zeitintervall Δt',
• wenn der Mittelwert der zweiten linearen Beschleunigung entlang der y-Achse (*̅A̅*̅_̅{̅1̅*̅y̅*̅}̅) der besagten ersten Triade von linearen Beschleunigungen (A₁ₓ, A_{1y}, A_{1z})geringer ist als der vorgegebene erste lineare Beschleunigungs-Schwellenwert TA und/oder der Mittelwert der zweiten linearen Beschleunigung entlang der y-Achse (*̅A̅*̅_̅{̅2̅*̅y̅*̅}̅) der besagten zweiten Triade linearer Beschleunigungen (A₂ₓ, A_{2y}, A_{2z}) kleiner ist/sind als der besagte vorgegebene erste lineare Beschleunigungsschwellenwert T_{A} und wenn der besagte erste Index K niedriger bleibt als der vorgegebene erste Schwellenwert *T₁.*

3. Überwachungssystem nach einem der vorigen Ansprüche, **dadurch gekennzeichnet, dass** die besagte erste Trägheitsmesseinheit (12) konfiguriert ist, um zu jedem Zeitpunkt t eine zweite Winkelgeschwindigkeit um die y-Achse (V_{1y}) mithilfe des besagten ersten Gyroskops (121) zu erfassen,
indem, dass
die besagte erste Logiksteuereinheit (13) konfiguriert ist zum:
o Empfangen, zu jedem Zeitpunkt t, von der ersten Trägheitsmesseinheit (12), die besagte Winkelgeschwindigkeit um die y-Achse (V_{1y}),
o Filtern, zu jedem Zeitpunkt t, der besagten Winkelgeschwindigkeit um die y-Achse (V_{1y}) durch den besagten ersten Mahony-Filter, um einen dritten Versatzfehler zu beseitigen, der mit dem ersten Gyroskop (121) über die besagte erste Triade von Linearbeschleunigungen (A₁ₓ, A_{1y}, A_{1z})in Zusammenhang steht, und Erhalten einer weiteren Winkelgeschwindigkeit um die y-Achse (V_{1y}') zu jedem Zeitpunkt t,
o Senden, zu jedem Zeitpunkt t, des Wertes der besagten weiteren Winkelgeschwindigkeit um die y-Achse (V_{1y}') zum besagten Master-Gerät (2) durch besagtes erstes drahtloses Transceivermodul (11), indem, dass das besagte zweite Trägheitsmesseinheit (22) konfiguriert ist, um zu jedem Zeitpunkt t eine zweite Winkelgeschwindigkeit um die y-Achse (V_{2y}) mithilfe des besagten zweiten Gyroskops (221) zu erfassen, indem, dass die besagte erste Logiksteuereinheit (23) konfiguriert ist zum:
o Empfangen, zu jedem Zeitpunkt t, von der besagten zweiten Trägheitsmess-Einheit (22), der besagten Winkelgeschwindigkeit um die y-Achse (V_{2y}),
o Filtern, zu jedem Zeitpunkt t, der besagten Winkelgeschwindigkeit um die y-Achse (V_{2y}) mittels eines besagten zweiten Mahony-Filters, um einen vierten Versatzfehler im Zusammenhang mit dem zweiten Gyroskop (221) zu eliminieren und eine weitere Winkelgeschwindigkeit um die y-Achse (V_{2y}') zu jedem Zeitpunkt t zu erhalten,
o Berechnen, zu jedem Zeitpunkt *t*, des Moduls der besagten weiteren Winkel-Geschwindigkeit um die y-Achse (V_{1y}'), die dem Slave-Gerät (1) zugeordnet ist, umum seinen absoluten Wert zu erhalten (|*V*_{1*y*}'|),
o Berechnen, zu jedem Zeitpunkt *t*, des Moduls der besagten weiteren Winkel-Geschwindigkeit um die y-Achse (V_{2y}') zu jedem Zeitpunkt t, welche dem Master-Gerät (2) zugeordnet ist, um ihren absoluten Wert zu erhalten (|*V*_{2*y*}'|),
o Berechnen, zu jedem Zeitpunkt *t*, eines zweiten Index K', der den absoluten Wert der besagten weiteren Winkelgeschwindigkeit um die y-Achse (|V_{1y}'|) hinzurechnet, die dem Slave-Gerät (1) in einem Zeitpunkt t zugeordnet ist, und den Absolutwert dieser besagten weiteren Winkelgeschwindigkeit um die y-Achse (|V_{2y}'|) zu erhalten, die dem Master-Gerät (2) zum selben Zeitpunkt *t* zugeordnet ist,
o Überprüfen, zu jedem Zeitpunkt *t*, ob der besagte zweite Index K' größer ist als ein vorgegebener dritter Schwellenwert T₃, um zu erkennen, ob die besagte Person sich um sich selbst dreht.

4. Überwachungssystem nach einem der vorigen Ansprüche, **dadurch gekennzeichnet, dass** besagte erste Trägheitsmesseinheit (12) konfiguriert ist, um zu jedem Zeitpunkt t eine dritte Winkelgeschwindigkeit zu erfassen, eine Winkelgeschwindigkeit um die z-Achse (V_{1z}) mithilfe des besagten ersten Gyroskops (121), indem, dass die erste Logiksteuereinheit (13) konfiguriert ist zum:
o Empfangen, zu jedem Zeitpunkt t, von der ersten Trägheitsmesseinheit (12) die besagte Winkelgeschwindigkeit um die z-Achse (V_{1z}),
o Filtern, zu jedem Zeitpunkt t, der besagten Winkelgeschwindigkeit um die z-Achse (V_{1z}) durch den besagten ersten Mahony-Filter, um den besagten fünften Versatzfehler zu beseitigen, der mit dem ersten Gyroskop (121) über die besagte erste Triade von Linearbeschleunigungen (A₁ₓ, A_{1y}, A_{1z}) in Zusammenhang steht, und Erhalten einer weiteren Winkelgeschwindigkeit um die z-Achse (V_{1z'}) zu jedem Zeitpunkt t,
o Senden, zu jedem Zeitpunkt t, des Wertes der besagten weiteren Winkelgeschwindigkeit um die z-Achse (V_{1z'}) zum besagten Master-Gerät (2) durch besagtes erstes drahtloses Transceivermodul (11), indem, dass das besagte zweite Trägheitsmesseinheit (22) konfiguriert ist, um zu jedem Zeitpunkt t eine dritte Winkelgeschwindigkeit um die Z-Achse (V_{2z}) mithilfe des besagten zweiten Gyroskops (221) zu erfassen, indem, dass die besagt erste Logiksteuereinheit (23) konfiguriert ist zum:
o Empfangen, zu jedem Zeitpunkt t, von der besagten zweiten Trägheitsmess-Einheit (22), der besagten Winkelgeschwindigkeit um die Z-Achse (V_{2z}),
o Filtern, zu jedem Zeitpunkt t, der besagten Winkelgeschwindigkeit um die z-Achse (V_{2z}), mittels des besagten zweiten Mahony-Filters, um besagten sechsten Versatzfehler im Zusammenhang mit dem zweiten Gyroskop (221) mithilfe der besagten zweiten Triade linearer Beschleunigungen (A₂ₓ, A_{2y}, A_{2z}) zu beseitigen, und Erhalten einer weiteren Winkelgeschwindigkeit um die Z-Achse (V_{2z}') zu jedem Zeitpunkt t,
o Berechnen, zu jedem Zeitpunkt t, des Moduls der besagten weiteren Winkelgeschwindigkeit um die z-Achse (V_{1z'}), die dem Slave-Gerät (1) zugeordnet ist, um ihren absoluten Wert (|V_{1z}'|) zu erhalten,
o Berechnen, zu jedem Zeitpunkt t, des Moduls der besagten weiteren Winkelgeschwindigkeit um die z-Achse (V_{2z}') zu jedem Zeitpunkt t, welche dem Master-Gerät (2) zugeordnet ist, um ihren absoluten Wert (|V₂ₓ'|) zu erhalten,
o Berechnen, zu jedem Zeitpunkt t, eines dritten Index K", der den absoluten Wert der besagten weiteren Winkelgeschwindigkeit um die z-Achse (|V_{1yz}'|) hinzurechnet, die dem Slave-Gerät (1) in einem Zeitpunkt t zugeordnet ist, und des Absolutwerts der besagten weiteren Winkelgeschwindigkeit um die z-Achse (|V_{2z}'|), der dem Master-Gerät (2) zum selben Zeitpunkt t zugeordnet ist,
o Überprüfen, zu jedem Zeitpunkt *t*, ob der besagte dritte Index K" größer ist als ein vorbestimmter vierter Schwellenwert T₄, um zu überprüfen, ob die besagte Person ihr Becken in seiner vorderen Ebene (P) bewegt.

5. Überwachungssystem nach einem der vorigen Ansprüche, **dadurch gekennzeichnet, dass** der besagte erste Tiefpassfilter eine Abschaltfrequenz von zwischen 0,83 Hz und 2,7 Hz aufweist, und der besagte zweite Tiefpassfilter eine Abschaltfrequenz von zwischen 0,83 Hz und 2,7 Hz aufweist.

6. Überwachungssystem nach einem der vorigen Ansprüche, **dadurch gekennzeichnet, dass** der besagte erste Tiefpassfilter mit dem besagten zweiten Tiefpassfilter zusammenfällt.

7. Überwachungssystem nach einem der vorigen Ansprüche, **dadurch gekennzeichnet, dass** das besagte Master-Gerät (2) Speichermittel (25) zum Speichern von Daten umfasst, wobei die besagten Speichermittel (25) mit der besagten zweiten logischen Steuereinheit (23) verbunden sind.

8. Verfahren zur Überwachung der motorischen Aktivität der unteren Gliedmaßen einer Person durch ein Überwachungssystem nach einem der vorigen Ansprüche, besagtes Verfahren umfasst die folgenden Schritte:
A) Erfassen, zu jedem Zeitpunkt t, der Winkelgeschwindigkeit um die x-Achse (V₁ₓ), die dem besagten Slave-Gerät (1) zugeordnet ist, und einer ersten Triade von linearen Beschleunigungen (A₁ₓ, A_{1y}, A_{1z}), die dem besagten Slave-Gerät (1) zugeordnet ist: Eine erste lineare Beschleunigung entlang der x-Achse (A₁ₓ), eine zweite lineare Beschleunigung entlang der y-Achse (A_{1y}) und eine dritte lineare Beschleunigung entlang der z-Achse (A_{1z}),
B) Filtern, zu jedem Zeitpunkt t, der besagten Winkelgeschwindigkeit um die x-Achse (V₁ₓ) mittels eines ersten Orientierungsfilters zur Eliminierung eines ersten Versatzfehlers, die dem ersten Gyroskop (121) zugeordnet ist, und Erhalten einer weiteren Winkelgeschwindigkeit um die x-Achse (V₁ₓ') zu jedem Zeitpunkt t, wobei der besagte erste Orientierungsfilter ein erster Mahony-Filter ist, der dazu konfiguriert ist, besagten ersten Versatzfehler durch besagte erste Triade linearer Beschleunigungen (A₁ₓ, A_{1y}, A_{1z}) zu beseitigen,
C) Erfassen, zu jedem Zeitpunkt t, mindestens einer Winkelgeschwindigkeit um die x-Achse (V₂ₓ), die dem besagten Master-Gerät (2) zugeordnet ist, und einer zweiten Triade von linearen Beschleunigungen (A₂ₓ, A_{2y}, A_{2z}), die dem besagten Master-Gerät (2) zugeordnet ist: Eine lineare Beschleunigung entlang der x-Achse (A₂ₓ), eine zweite lineare Beschleunigung entlang der y-Achse (A_{2y}) und eine dritte lineare Beschleunigung entlang der z-Achse (A_{2z}),
D) Filtern, zu jedem Zeitpunkt t, der besagten Winkelgeschwindigkeit um die x-Achse (V₂ₓ) mittels eines zweiten Orientierungsfilters, um einen zweiten Versatzfehler im Zusammenhang mit dem zweiten Gyroskop (221) zu beseitigen und eine weitere Winkelgeschwindigkeit um die x-Achse (V₂ₓ') zu jedem Zeitpunkt t zu erhalten, wobei der besagte zweite Orientierungsfilter ein zweiter Mahony-Filter ist, der dazu konfiguriert ist, den besagten zweiten Versatzfehler durch die besagte zweite Triade von linearen Beschleunigungen (A₂ₓ, A_{2y}, A_{2z}) zu beseitigen,
E) Berechnen, zu jedem Zeitpunkt t, des Moduls der besagten weiteren Winkelgeschwindigkeit um die x-Achse (V₁ₓ), die dem Slave-Gerät (1) zugeordnet ist, um einen absoluten Wert (|V₁ₓ'|) zu erhalten,
F) Filtern, zu jedem Zeitpunkt t, des Moduls der besagten weiteren Winkelgeschwindigkeit um die x-Achse (V₁ₓ'), die dem Slave-Gerät (1) zugeordnet ist, mittels eines ersten Tiefpassfilters, um einen absoluten gefilterten Wert (|V₁ₓ'|_{LP}) zu erhalten,
G) Berechnen, zu jedem Zeitpunkt t, des Moduls der besagten weiteren Winkelgeschwindigkeit um die x-Achse (V₂ₓ'), die dem Master-Gerät (2) zugeordnet ist, um einen absoluten Wert (|V₂ₓ'|) zu erhalten,
H) Filtern, zu jedem Zeitpunkt t, des Moduls der besagten weiteren Winkelgeschwindigkeit um die x-Achse (V₂ₓ'), die dem Master-Gerät (2) zugeordnet ist, mittels eines zweiten Tiefpassfilters, um dessen absoluten gefilterten Wert (|V₂ₓ'|_{LP}) zu erhalten,
I) Berechnen, zu jedem Zeitpunkt t, eines ersten Index K, der den gefilterten Absolutwert dieser besagten weiteren Winkelgeschwindigkeit um die x-Achse (|V₁ₓ'|_{LP}) hinzurechnet, die dem Slave-Gerät (1) in einem Zeitpunkt t zugeordnet ist, mit dem absoluten gefilterten Wert der besagten weiteren Winkelgeschwindigkeit um die X-Achse (|V₂ₓ'|_{LP}), der dem Master-Gerät (2) zum selben Zeitpunkt t zugeordnet ist, wobei der besagte Schritt I) die folgenden Teilschritte umfasst:
11) Überprüfen, zu jedem Zeitpunkt t, ob der besagte erste Index K kleiner ist als der vorgegebene erste Schwellenwert *T₁,* um zu erkennen, ob die besagte Person nicht geht,
12) wenn der erste Index K größer ist als der besagte vorgegebene erste Schwellenwert *T₁,* überprüfen, ob der erste Index K zwischen dem besagten vorbestimmten ersten Schwellenwert *T₁* und einem vorbestimmten zweiten Schwellenwert *T₂* liegt, der größer ist als der besagte vorgegebene erste Schwellenwert *T₁,* um zu erkennen, ob die besagte Person mit einem unregelmäßigen Gang geht, oder wenn der erste Index K größer als der besagte vorbestimmte zweite Schwellenwert *T₂*, um zu überprüfen, ob die besagte Person mit einem regelmäßigen Gang geht.

9. Verfahren nach dem vorherigen Anspruch, **dadurch gekennzeichnet, dass** besagtes Verfahren die folgenden Schritte umfasst:
J) Berechnen des Mittelwerts der zweiten linearen Beschleunigung entlang der y-Achse (*̅A̅*̅_̅{̅1̅*̅y̅*̅}̅) der besagten ersten Triade linearer Beschleunigungen, die dem Slave-Gerät (1) zugeordnet ist, in einem vorgegebenen ersten Zeitintervall Δt, ebenso wie dem Mittelwert der zweiten linearen Beschleunigung entlang der y-Achse (*̅A̅*̅_̅{̅2̅*̅y̅*̅}̅) der besagten zweiten Triade linearer Beschleunigungen im Zusammenhang mit dem Master-Gerät (2) im besagten vorbestimmten ersten Zeitintervall Δt,
K) Überprüfen, ob der Mittelwert der zweiten linearen Beschleunigung entlang der y-Achse (*̅A̅*̅_̅{̅1̅*̅y̅*̅}̅) der besagten ersten Triade linearer Beschleunigungen (A₁ₓ, A_{1y}, A_{1z}), die dem besagten Slave-Gerät (1) zugeordnet ist, größer ist als ein vorgegebener linearer Beschleunigungsschwellenwert T_{A}, um festzustellen, ob das Schienbein des ersten Beins der Person senkrecht zum Boden steht, und ob der Mittelwert der zweiten linearen Beschleunigung entlang der y-Achse (*̅A̅*̅_̅{̅2̅*̅y̅*̅}̅) entlang der besagten zweiten Triade linearer Beschleunigungen (A₂ₓ, A_{2y}, A_{2z}) größer ist als der besagte vorgegebene lineare Beschleunigungsschwellenwert T_{A}, um festzustellen, ob das Schienbein des zweiten Beins der Person senkrecht zum Boden steht,
L) Versetzen in den Schlafmodus des besagten Slave-Geräts (1) und des besagten Master-Geräts (2) in einer der folgenden zwei Bedingungen:
▪ Wenn der besagte Mittelwert der besagten zweiten linearen Beschleunigung entlang der y-Achse (*̅A̅*̅_̅{̅1̅*̅y̅*̅}̅)der besagten ersten Triade linearer Beschleunigungen (A₁ₓ, A_{1y}, A_{1z}) und der besagten zweiten linearen Beschleunigung entlang der y-Achse (A_{2y}) der besagten zweiten Triade linearer Beschleunigungen (A₂ₓ, A_{2y}, A2z) größer bleibt als der besagte vorgegebene erste lineare Beschleunigungs-Schwellenwert T_{A} für ein vorbestimmtes zweites Zeitintervall Δt', größer als das besagte erste Zeit-Intervall Δt, und wenn der besagte erste Index K niedriger bleibt als der besagte vorbestimmte erste Schwellenwert T₁ für das besagte vorbestimmte zweite Zeitintervall Δt',
▪ Wenn der Mittelwert der zweiten linearen Beschleunigung entlang der y-Achse (*̅A̅*̅_̅{̅1̅*̅y̅*̅}̅) der besagten ersten Triade linearer Beschleunigungen (A₁ₓ, A_{2y}, A_{2z}) kleiner ist als die besagte vorgegebene erste lineare Schwellenwert-Beschleunigung T_{A} und/oder der Mittelwert der besagten zweiten linearen Beschleunigung entlang der y-Achse (*̅A̅*̅_̅{̅2̅*̅y̅*̅}̅) der besagten zweiten Triade linearer Beschleunigungen (A₂ₓ, A_{2y}, A_{2z}) geringer ist als der besagte vorgegebene erste lineare Beschleunigungs-Schwellenwert T_{A}, und der besagte erste Index K niedriger bleibt als der besagte vorbestimmte erste Schwellenwert T₁.

10. Verfahren nach einem Ansprüche 8 oder 9, **dadurch gekennzeichnet, dass**:
Schritt A) die Erfassung zu jedem Zeitpunkt t einer Winkelgeschwindigkeit um die y-Achse (V_{1y}) umfasst, die dem Slave-Gerät (1) zugeordnet ist,
Schritt B) umfasst die Erfassung zu jedem Zeitpunkt t der besagten Winkel-Geschwindigkeit um die y-Achse (V_{1y}), die dem besagten Slave-Gerät (1) zugeordnet ist, mittels des besagten ersten Mahony-Filters, um einen dritten Versatzfehler zu beseitigen, der mit dem ersten Gyroskop (121) in Zusammenhang steht, über die besagte erste Triade von linearen Beschleunigungen (A₁ₓ, A_{1y}, A_{1z}), und Erhalten, zu jedem Zeitpunkt, einer weiteren dritten Winkelgeschwindigkeit um die y-Achse (V_{1y}'),
Schritt C) umfasst die Erfassung zu jedem Zeitpunkt t einer Winkelgeschwindigkeit um die y-Achse (V_{2y}), welche besagtem Master-Gerät (2) zugeordnet ist,
Schritt D) umfasst das Filtern, zu jedem Zeitpunkt, der besagten Winkelgeschwindigkeit um die y-Achse (V_{2y}), die dem besagten Master-Gerät (2) zugeordnet ist, mittels des besagten zweiten Mahony-Filters, um einen vierten Versatzfehler zu beseitigen, der mit dem zweiten Gyroskop (221) über die besagte zweite Triade von linearen Beschleunigungen (A₂ₓ, A_{2y}, A_{2z}) in Zusammenhang steht, und Erhalten, zu jedem Zeitpunkt t, einer weiteren Winkelgeschwindigkeit um die y-Achse (V_{2y}'), indem, dass besagtes Verfahren die folgenden Schritte umfasst:
M) Berechnen, zu jedem Zeitpunkt t, des Moduls der besagten weiteren Winkelgeschwindigkeit um die y-Achse (V₁ₓ), die dem Slave-Gerät (1) zugeordnet ist, um deren absoluten Wert (|V₁ₓ'|) zu erhalten,
N) Berechnen, zu jedem Zeitpunkt t, des Moduls der besagten weiteren Winkelgeschwindigkeit um die y-Achse (V_{2y}'), die dem Master-Gerät (2) zugeordnet ist, um deren absoluten Wert (|V_{2y}'|) zu erhalten,
O) Berechnen, zu jedem Zeitpunkt t, eines zweiten Index K', der den Absolutwert dieser besagten weiteren Winkelgeschwindigkeit um die y-Achse (|V₁ₓ'|) hinzurechnet, die dem Slave-Gerät (1) in einem Zeitpunkt t zugeordnet ist, und mit dem absoluten Wert der besagten weiteren Winkelgeschwindigkeit um die y-Achse (|V_{2y}'), die gleichzeitig dem Master-Gerät (2) in demselben Zeitpunkt t zugeordnet ist, wobei der besagte Schritt
O) den folgenden Teilschritt umfasst:
O1) Überprüfen, zu jedem Zeitpunkt t, ob der besagte zweite Index K' größer ist als der vorbestimmte zweite Schwellenwert T3, um zu überprüfen, ob die besagte Person sich um sich selbst dreht.

11. Verfahren nach einem Ansprüche 8-10, **dadurch gekennzeichnet, dass**:
Schritt A) die Erfassung zu jedem Zeitpunkt t einer Winkelgeschwindigkeit um die Z-Achse (V_{1z}) umfasst, die dem besagten Slave-Gerät (1) zugeordnet ist,
Schritt B) umfasst das Filtern zu jedem Zeitpunkt t der besagten Winkel-Geschwindigkeit um die Z-Achse (V_{1z}), die dem besagten Slave-Gerät (1) zugeordnet ist, mittels des besagten ersten Mahony-Filters, um einen fünften Versatzfehler zu beseitigen, der mit dem ersten Gyroskop (121) in Zusammenhang steht, durch die besagte erste Triade von linearen Beschleunigungen (A₁ₓ, A_{1y}, A_{1z}), und Erhalten, zu jedem Zeitpunkt t, einer weiteren Winkelgeschwindigkeit um die z-Achse (V_{1z}'),
Schritt C) umfasst die Erfassung, zu jedem Zeitpunkt t, einer Winkelgeschwindigkeit um die z-Achse (V_{2z}), welche besagtem Master-Gerät (2) zugeordnet ist,
Schritt D) umfasst das Filtern, zu jedem Zeitpunkt t, der besagten Winkelgeschwindigkeit um die z-Achse (V_{2z}), die dem besagten Master-Gerät (2) zugeordnet ist, mittels des besagten zweiten Mahony-Filters, um einen sechsten Versatzfehler zu beseitigen, der mit dem zweiten Gyroskop (221) über die besagte zweite Triade von linearen Beschleunigungen (A₂ₓ, A_{2y}, A_{2z}) in Zusammenhang steht, und Erhalten, zu jedem Zeitpunkt t, einer weiteren Winkelgeschwindigkeit um die z-Achse (V_{2z}'), indem, dass besagtes Verfahren die folgenden Schritte umfasst:
P) Berechnen, zu jedem Zeitpunkt t, des Moduls der besagten weiteren Winkelgeschwindigkeit um die z-Achse (V_{1z'}), die dem Slave-Gerät (1) zugeordnet ist, um deren absoluten Wert (|V₁ₓ'|) zu erhalten,
Q) Berechnen, zu jedem Zeitpunkt t, des Moduls der besagten weiteren Winkelgeschwindigkeit um die z-Achse (V_{2z}'), die dem Master-Gerät (2) zugeordnet ist, um deren absoluten Wert (|V_{2z}'|) zu erhalten,
R) Berechnen, zu jedem Zeitpunkt t, eines dritten Index K", der den Absolutwert dieser besagten weiteren Winkelgeschwindigkeit um die z-Achse (|V_{1z}'|) hinzurechnet, die dem Slave-Gerät (1) in einem Zeitpunkt t zugeordnet ist, und mit dem absoluten Wert der besagten weiteren Winkelgeschwindigkeit um die z-Achse (|V_{2X}'|), die dem Master-Gerät (2) in demselben Zeitpunkt t zugeordnet ist, wobei der besagte Schritt R) den folgenden Teilschritt umfasst:
R1) Prüfen, ob der besagte dritte Index K" größer ist als ein vorbestimmter vierter Schwellenwert um zu erkennen, ob die besagte Person ihr Becken in seiner vorderen Ebene bewegt (P).

## Revendications

1. Un système de surveillance pour surveiller l'activité motrice de membres inférieurs d'une personne, ledit système comprend:
- un premier dispositif électronique qui est un dispositif esclave (1) et un second dispositif électronique qui est un dispositif maître (2), devant être positionné, utilisé respectivement sur une partie de la première jambe et une partie de la seconde jambe, où ledit dispositif esclave (1) comprend à l'intérieur:
- des premiers moyens d'alimentation (14) pour fournir l'alimentation audit dispositif esclave (1);
- un premier module émetteur-récepteur sans fil (11) pour transmettre et recevoir des données à/depuis le dispositif maître (2),
- une première unité de mesure inertielle (12), comprenant un premier gyroscope (121) et un premier accéléromètre (122), configuré pour:
o obtenir à chaque instant t, à travers le premier gyroscope (121), au moins une première vélocité angulaire étant une vélocité angulaire autour de l'axe (V₁ₓ), et
o obtenir à chaque instant t, à travers ledit premier accéléromètre (122), une première triade d'accélérations linéaires (A₁ₓ, A_{1y}, A_{1z}): une première accélération linéaire le long de l'axe x (A₁ₓ) une seconde accélération linéaire le long de l'axe y (A_{1y}), et une troisième accélération linéaire le long de l'axe z (A_{1z}),
- une première unité de commande logique (13), connectée à ladite première unité de mesure inertielle (12) et audit premier module émetteur récepteur sans fil (11), et configuré pour:
o recevoir à chaque instant temps t de ladite première unité de mesure (12) au moins ladite première vélocité angulaire autour de l'axe x (V₁ₓ) et ladite première triade d'accélérations linéaires (A₁ₓ, A_{1y}, A_{1z}),
o filtrer au moins chaque instant t ladite vélocité angulaire autour de l'axe x (V₁ₓ) aux moyens d'une première orientation de filtre pour éliminer une première erreur de décalage associée au premier gyroscope (121), et obtenir une vitesse angulaire supplémentaire autour de l'axe x axis (V₁ₓ') à chaque instant t, où ledit filtre de première orientation est un filtre Mahony configuré pour éliminer ladite première erreur de décalage à travers ladite première triade d'accélérations linéaires (A₁ₓ, A_{1y}, A_{1z}),
o transmettre à chaque instant t la valeur de ladite vélocité angulaire supplémentaire autour de l'axe (V₁ₓ') pour ledit dispositif esclave (2) à travers ledit premier module émetteur-récepteur sans fil (11), ledit dispositif maître (2) comprend à l'intérieur:
- un deuxième moyen d'alimentation (24) pour fournir l'alimentation audit second dispositif maître (2),
- un second module émetteur-récepteur sans fil (21) pour transmettre et recevoir des données à partir de/depuis ledit dispositif esclave (1),
- une deuxième unité de mesure inertielle (22), comprenant un second gyroscope (221) et un second accéléromètre (222), configuré pour:
o obtenir à chaque instant t à travers ledit second gyroscope (221) au moins une première vélocité angulaire étant une vélocité angulaire autour de l'axe x (V₂ₓ),
o obtenir à chaque instant t, à travers ledit second accéléromètre (222), une seconde triade d'accélération linéaire (A₂ₓ, A_{2y}, A_{2z}): une première accélération linéaire le long de l'axe x (A₂ₓ), une second accélération linéaire le long de l'axe y (A_{2y}), et une troisième accélération linéaire le long de l'axe z (A_{2z}),
- une seconde unité de commande logique (23), connectée à ladite seconde unité de mesure inertielle (22) et pour ledit second module émetteur-récepteur sans fil (21), et configurée pour:
o recevoir à chaque instant t à partir de la seconde unité de mesure inertielle (22) ladite vélocité angulaire autour de l'axe x (V₂ₓ) et ladite seconde triade d'accélération linéaire (A₂ₓ, A_{2y}, A_{2z})
o filtrer à chaque instant t ladite vélocité angulaire autour de l'axe x (V₂ₓ) aux moyens d'un deuxième filtre d'orientation pour éliminer une seconde erreur de décalage associée avec le second gyroscope (221), et obtenir une vélocité angulaire supplémentaire autour de l'axe x (V₂ₓ') à chaque instant t, où ledit deuxième filtre d'orientation est un second filtre Mahony configuré pour éliminer ladite seconde erreur à travers ladite seconde triade d'accélérations linéaires (A₂ₓ, A_{2y}, A_{2z}),
o calculer à chaque instant temps t le module de chaque vélocité angulaire supplémentaire autour de l'axe x (V₁ₓ'), associé avec le dispositif esclave (1), pour obtenir sa valeur absolue (|V₁ₓ'|), o filtrer à chaque instant temps t ladite valeur absolue de ladite vélocité angulaire supplémentaire autour de l'axe x (|V₁ₓ'|) associé au dispositif esclave (1) aux moyens d'un premier filtre passe-bas, pour obtenir une valeur absolue filtrée (|V₁ₓ'|_{LP}) à chaque instant t,
o calculer à chaque instant t le module de ladite vélocité angulaire supplémentaire autour de l'axe x (V₂ₓ) associé au dispositif maître (2), pour obtenir sa valeur absolue (|V₂ₓ'|),
o filtrer à chaque instant t ladite valeur absolue de ladite vélocité angulaire supplémentaire autour de l'axe x (|V_{2X}'|) associé au dispositif maître (aux moyens d'un second filtre passe-bas, pour obtenir une valeur filtrée absolue (|V₂ₓ'|_{LP}) à chaque instant t,
o calculer à chaque instant t un premier indice K ajoutant la valeur absolue filtrée de ladite vélocité angulaire supplémentaire autour de l'axe x (|V₁ₓ'|_{LP}) associé au dispositif esclave (1) en un instant temps et la valeur absolue filtrée de ladite première vélocité angulaire autour de l'axe x *(*|*V₂ₓ'*|*_{LP})* associé au dispositif maître (2) au même moment que l'instant t,
o vérifier à chaque instant temps t si le premier indice K est inférieur à la valeur d'un premier seuil déterminé T1, de manière à détecter si ladite personne ne marche pas,
o si ledit premier indice K est supérieur à ladite première valeur de seuil prédéterminée *T₁,* vérifier si ledit premier indice K se trouve entre ladite première valeur de seuil *T₁* et une seconde valeur prédéterminée *T₂*, supérieur à ladite première valeur de seuil prédéterminée *T₁,* de manière à détecter si ladite personne marche avec une démarche irrégulière, ou si ledit premier indice K est supérieur à la seconde valeur prédéterminée *T₂*, de manière à détecter si la personne marche avec une démarche irrégulière.

2. Le système de surveillance selon les revendications précédentes est **caractérisé par** ladite première unité de contrôle logique (13) est configuré pour:
o calculer la valeur moyenne de la seconde accélération linéaire le long de l'axe y (*̅A̅*̅_̅{̅1̅*̅y̅*̅}̅) de ladite triade d'accélération linéaire associée au dispositif esclave (1) dans un premier intervalle de temps prédéterminé Δt,
o vérifier si la valeur moyenne de la seconde accélération linéaire le long de l'axe y (*̅A̅*̅_̅{̅1̅*̅y̅*̅}̅) de ladite triade d'accélération linéaire (A₁ₓ, A_{1y}, A_{1z}) associée au dispositif esclave (1) est supérieure à une valeur seuil d'accélération linéaire prédéterminée T_{A}, de manière à détecter si le tibia de la première jambe de la personne est perpendiculaire au sol,
o envoyer le résultat de la vérification référée à la valeur moyenne de ladite seconde accélération linéaire le long de l'axe y (*̅A̅*̅_̅{̅1̅*̅y̅*̅}̅) de ladite première triade d'accélération linéaire (A₁ₓ, A_{1y}, A_{1z}) au dispositif maître (2), à travers le premier module émetteur-récepteur sans fil (11) dudit dispositif esclave (1), dans la deuxième unité de commande logique (23) qui est configurée pour:
o recevoir le résultat de la vérification référée à la valeur moyenne de ladite seconde accélération linéaire le long de l'axe y (*̅A̅*̅_̅{̅1̅*̅y̅*̅}̅) de ladite première triade d'accélérations linéaires (A₁ₓ, A_{1y}, A_{1z}),
o calculer la valeur moyenne de la seconde accélération linéaire le long de l'axe y (*̅A̅*̅_̅{̅2̅*̅y̅*̅}̅) de ladite seconde triade d'accélération linéaire associée au dispositif maître (2) dans ledit premier intervalle de temps prédéterminé Δt,
o vérifier la valeur moyenne de la seconde accélération linéaire le long de l'axe y (*̅A̅*̅_̅{̅2̅*̅y̅*̅}̅) de ladite seconde triade d'accélérations linéaires (A₂ₓ, A_{2y}, A_{2z}), qui est supérieure à ladite valeur seuil d'accélération linéaire prédéterminée T_{A}, de manière à détecter si le tibia d'une deuxième jambe d'une personne est perpendiculaire au sol,
o passer en mode veille ledit dispositif esclave (1) et ledit dispositif maître (2) en une des deux conditions suivantes:
• lorsque la valeur moyenne de ladite seconde accélération linéaire le long de l'axe y (*̅A̅*̅_̅{̅1̅*̅y̅*̅}̅) de ladite première triade d'accélérations linéaires (A₁ₓ, A_{1y}, A_{1z}) et lesdites valeurs moyennes de ladite seconde accélération linéaire le long de l'axe y (*̅A̅*̅_̅{̅2̅*̅y̅*̅}̅) de ladite seconde triade d'accélération linéaire (A₂ₓ, A_{2y}, A_{2z}) demeurent supérieures à ladite valeur seuil prédéterminée de la première accélération linéaire TA pour un deuxième intervalle de temps prédéterminé Δt', supérieur audit premier intervalle de temps Δt, et lorsque ledit premier indice K reste inférieur à ladite valeur prédéterminée du premier seuil *T₁* pour un second intervalle de temps prédéterminé Δt',
• lorsque la valeur moyenne de la deuxième accélération linéaire le long de l'axe y (*̅A̅*̅_̅{̅1̅*̅y̅*̅}̅) de ladite première triade d'accélération linéaire (A₁ₓ, A_{1y}, A_{1z}) est inférieure à ladite valeur seuil prédéterminée de la première accélération linéaire T_{A} et/ou la valeur moyenne de la seconde accélération linéaire le long de l'axe y (*̅A̅*̅_̅{̅2̅*̅y̅*̅}̅) de ladite seconde triade d'accélération linéaire (A₂ₓ, A_{2y}, A_{2z}) est inférieure à ladite première valeur seuil prédéterminée de l'accélération linéaire T_{A} lorsque ledit premier indice K demeure inférieur à ladite première valeur de seuil prédéterminée *T₁*.

3. Le système de surveillance selon l'une quelconque des revendications précédentes est **caractérisé par le fait que** la première unité de mesure inertielle (12) est configurée pour obtenir à chaque instant t une seconde vélocité angulaire étant une vélocité angulaire autour de l'axe y (V_{1y}) aux moyens d'un premier gyroscope (121), dans ladite première unité de commande logique (13) est configurée pour :
o recevoir à chaque instant t de l'unité de première mesure inertielle (12) ladite vélocité angulaire autour de l'axe y (V_{1y}),
o filtrer à chaque instant t ladite vélocité angulaire autour de l'axe y (V_{1y}) à travers ledit premier filtre Mahony pour éliminer une troisième erreur de décalage avec le premier gyroscope (121) à travers ladite première triade d'accélération linéaire (A₁ₓ, A_{1y}, A_{1z}), et obtenir une vélocité angulaire supplémentaire autour de l'axe y (V_{1y}') à chaque instant t,
o envoyer à chaque instant t la valeur de ladite vélocité angulaire supplémentaire autour de l'axe y (V_{1y}') audit dispositif maître (2) à travers ledit premier module émetteur-récepteur sans fil (11), dans ladite seconde unité de mesure inertielle (22) qui est configurée pour obtenir à chaque instant t une seconde vélocité angulaire étant une vélocité angulaire autour de l'axe y (V_{2y}) aux moyens dudit second gyroscope (221), dans ladite seconde unité de commande logique (23) qui est configurée pour:
o recevoir à chaque instant t de ladite seconde unité de mesure inertielle (22) ladite vélocité angulaire autour de l'axe y (V_{2y}), filtrer à chaque instant t ladite vélocité angulaire autour de l'axe y (V_{2y}), aux moyens dudit second filtre Mahony pour éliminer une quatrième erreur de décalage associé avec le second gyroscope (221), et obtenir une vélocité angulaire supplémentaire autour de l'axe y (V_{2y}')à chaque instant t, o calculer à chaque instant t le module de ladite vélocité angulaire supplémentaire autour de l'axe y (V_{1y}') associé au dispositif esclave (1), pour obtenir sa valeur absolue (|V_{1y}'|) ∘ calculer à chaque instant t le module de chaque vélocité angulaire supplémentaire autour de l'axe *(V_{2y}')* associée au dispositif maître (2), pour obtenir sa valeur absolue (|*V*₁*_{y}'*|),
o calculer à chaque instant t un second indice K' ajoutant la valeur absolue de ladite vélocité angulaire supplémentaire autour de l'axe y (|V_{1y}'|) associé au dispositif esclave (1) en un instant t et la valeur absolue de ladite vélocité angulaire supplémentaire autour de l'axe y (|V_{2y}'|) associé au dispositif maître (2) au même instant temps t,
o vérifier à chaque instant temps t si ledit second indice K' est supérieur à une valeur de seuil prédéterminée *T₃*, de manière à détecter si la personne tourne sur elle-même.

4. Le système de surveillance selon l'une quelconque des revendications précédentes, est **caractérisé par le fait que** l'unité de mesure inertielle (12) est configurée pour obtenir à chaque instant t une troisième vélocité angulaire étant une vélocité angulaire autour de l'axe z (V_{1z}) aux moyens dudit premier gyroscope (121), en ce sens que la première unité de commande logique (13) est configurée pour:
o recevoir à chaque instant t de ladite première unité de mesure inertielle (12) ladite vélocité angulaire autour de l'axe z (V_{1z}),
o filtrer à chaque instant temps *t* ladite vélocité angulaire autour de l'axe z (V_{1z}) à travers ledit premier filtre Mahony pour éliminer ladite cinquième erreur de décalage associée au premier gyroscope (121) à travers ladite première triade d'accélération linéaire (A₁ₓ, A_{1y}, A_{1z}), et obtenir une vélocité angulaire supplémentaire autour de l'axe z (V_{1z}') à chaque instant temps *t*,
o envoyer à chaque instant temps *t* la valeur de ladite vélocité angulaire supplémentaire autour de l'axe z (V_{1z}') audit dispositif maître (2) à travers ledit module émetteur-récepteur sans fil (11), dans ladite seconde unité de mesure inertielle (22) configurée pour obtenir à chaque instant t une troisième vélocité angulaire étant une vélocité angulaire autour de l'axe z (V_{2z}) aux moyens dudit second gyroscope (221), dans ladite seconde unité de contrôle logique (23) est configurée pour:
o recevoir à chaque instant *t* de ladite seconde unité de mesure inertielle (22) ladite seconde vélocité angulaire autour de l'axe z (V_{2z}),
o filtrer à chaque instant temps *t* ladite seconde vélocité angulaire autour de l'axe z (V_{2z}), aux moyens dudit second filtre Mahony, pour éliminer ladite sixième erreur de décalage associée avec le second gyroscope (221) à travers ladite seconde triade d'accélération linéaire (A₂ₓ, A_{2y}, A_{2z}), et obtenir une vélocité angulaire supplémentaire autour de l'axe z (V_{2z}') à chaque instant temps *t*, o calculer à chaque instant *t* le module de chaque vélocité angulaire supplémentaire autour de l'axe z (V_{1z}') associé au dispositif esclave (1), pour obtenir la valeur absolue *(*|*V_{1z}'*|*)*,
o calculer à chaque instant temps t le module de ladite vélocité angulaire supplémentaire autour de l'axe z (V_{2z}') associé au dispositif maître (2), pour obtenir sa valeur absolue (|V_{2z}'|),
o calculer à chaque instant temps *t* un troisième indice K" ajoutant la valeur absolue de ladite vélocité angulaire supplémentaire autour de l'axe z (|V_{1z}'|) associé au dispositif esclave (1) en un instant temps *t* et la valeur absolue de ladite vélocité angulaire autour de l'axe z (|V_{2z}'|) associée au dispositif maître (2) au même instant temps *t*,
o vérifier à chaque instant temps *t* si ledit troisième indice K" est supérieur à une valeur de seuil prédéterminée T₄, de manière à détecter si la personne bouge le pelvis sur son plan frontal (P).

5. Le système de surveillance selon l'une quelconque des revendications précédentes est **caractérisé par le fait que** le filtre passe-bas possède une fréquence de coupure d'entre 0,83 Hz et 2,7 Hz, et ledit second filtre passe-bas possède une fréquence de coupure entre 0,83 Hz et 2,7 Hz.

6. Ledit système de surveillance selon l'une quelconque des revendications précédentes est **caractérisé par le fait que** le filtre passe-bas coïncide avec ledit second filtre passe-bas.

7. Ledit système de surveillance selon l'une quelconque des revendications précédentes est **caractérisé par le fait que** ledit dispositif maître (2) comprend des moyens de stockage (25) pour stocker des données, où lesdits moyens de stockages (25) sont connectés à ladite seconde unité de commande logique (23).

8. La méthode pour surveiller l'activité motrice des membres inférieurs d'une personne aux moyens d'un système de surveillance selon l'une quelconque des revendications précédentes, ladite méthode comprend les étapes suivantes:
A) obtenir à chaque instant t une vélocité angulaire autour de l'axe x (V₁ₓ) associée audit dispositif esclave (1) et une première triade d'accélération linéaire (A₁ₓ, A_{1y}, A_{1z}) associée audit dispositif esclave (1) :
une première accélération linéaire le long de l'axe x (A₁ₓ), une seconde accélération linéaire le long de l'axe y (A_{1y}), et une troisième accélération linéaire le long de l'axe z (A_{1z}), B) filtrer à chaque instant temps t ladite vélocité angulaire autour de l'axe x (V₁ₓ) aux moyens d'un filtre de première orientation pour éliminer une première erreur de décalage associée au premier gyroscope (121), et obtenir une vélocité angulaire supplémentaire autour de l'axe x (V₁ₓ') à chaque instant temps *t*, où ledit filtre de première orientation est un premier filtre Mahony configuré pour éliminer ladite première erreur de décalage à travers ladite première triade d'accélération linéaire (A₁ₓ, A_{1y}, A_{1z}),
C)obtenir à chaque instant temps *t* au moins une vélocité angulaire autour de l'axe x (V₂ₓ) associé audit dispositif maître (2) et une seconde triade d'accélération linéaire (A₂ₓ, A_{2y}, A_{2z}) associée audit dispositif maître (2) :
une première accélération linéaire autour de l'axe x (A_{2X}), une seconde accélération le long de l'axe y (A_{2y}), et une troisième accélération linéaire le long de l'axe z (A_{2z}),
D) filtrer à chaque instant temps *t* ladite vélocité angulaire autour de l'axe x (V₂ₓ) aux moyens d'un filtre de seconde orientation pour éliminer une seconde erreur de décalage associé au second gyroscope (221), et obtenir une vélocité angulaire supplémentaire autour de l'axe x (V₂ₓ') à chaque instant temps *t*, où ledit second filtre d'orientation est un second filtre Mahony est configuré pour éliminer ladite seconde erreur de décalage à travers ladite seconde triade d'accélération linéaire (A₂ₓ, A_{2y}, A_{2z}),
E) calculer à chaque instant temps *t* le module de chaque vélocité angulaire supplémentaire autour de l'axe x (V₁ₓ) associé avec ledit dispositif esclave (1), pour obtenir une valeur absolue (|V₁ₓ'|),
F) filtrer à chaque instant temps t ledit module de chaque vélocité angulaire autour de l'axe x (V₁ₓ') associé au dispositif esclave (1) aux moyens d'un filtre passe-bas pour obtenir une valeur de filtre absolue (|V₁ₓ'|_{LP}),
G) calculer à chaque instant temps *t* le module de chaque vélocité angulaire (V₂ₓ') associé audit dispositif maître (2), pour obtenir une valeur absolue (|V₂ₓ'|), H) filtrer à chaque instant temps t ledit module de chaque vélocité angulaire autour de l'axe x (V₂ₓ') associé audit dispositif maître (2)aux moyens d'un second filtre passe-bas pour obtenir sa valeur absolue filtrée (|V ₂ₓ' |_{LP}),I) calculant à chaque instant temps t un premier indice K ajoutant la valeur absolue filtrée de ladite vélocité angulaire supplémentaire autour de l'axe x (|V₁ₓ'|_{LP}) associé au dispositif esclave (1) en un instant temps t avec la valeur absolue filtrée de ladite vélocité angulaire autour de l'axe x (|V₂ₓ'|_{LP}) associé au dispositif maître (2) au même instant temps t, où l'étape I) comprend les sous-étapes suivantes:
l1) vérifier si à chaque instant temps *t* ledit premier indice K est inférieur à la valeur de seuil prédéterminée *T1*, de manière à détecter si ladite personne ne marche pas, I2)si ledit premier indice *K* est supérieur à ladite première valeur de seuil prédéterminée *T₁*, vérifier si le premier indice *K* se trouve entre la première valeur seuil prédéterminée *T₁* et la seconde valeur de seuil prédéterminée *T₂*, supérieure à la valeur de seuil prédéterminée *T₁,* de manière à détecter si ladite personne marche avec une démarche irrégulière, ou si ledit premier indice K est supérieur à ladite seconde valeur de seuil prédéterminée *T₂*, de manière à détecter si ladite personne marche avec une démarche irrégulière.

9. La méthode selon la revendication précédente est **caractérisée par le fait que** ladite méthode comprend les sous-étapes suivantes:
J) calculer la valeur moyenne de ladite seconde accélération linéaire le long de l'axe y (*̅A̅*̅_̅{̅1̅*̅y̅*̅}̅) de ladite seconde triade d'accélération linéaire associée au dispositif esclave (1) dans un premier intervalle de temps prédéterminé Δt, ainsi que dans la valeur moyenne de la seconde accélération linéaire le long de l'axe y (*̅A̅*̅_̅{̅2̅*̅y̅*̅}̅) de ladite seconde triade d'accélération linéaire associée au dispositif maître (2) dans ledit premier intervalle de temps Δt, K) vérifier si la valeur moyenne de la seconde accélération linéaire le long de l'axe y (*̅A̅*̅_̅{̅1̅*̅y̅*̅}̅) de ladite première triade d'accélération linéaire (A₁ₓ, A_{1y}, A_{1z})associée au dispositif esclave (1) est supérieure à une valeur seuil d'accélération linéaire prédéterminée T_{A}, de manière à détecter si le tibia de la première jambe de la personne est perpendiculaire au sol, et si la valeur moyenne de la seconde accélération linéaire le long de l'axe y (*̅A̅*̅_̅{̅2̅*̅y̅*̅}̅) de ladite seconde triade d'accélération linéaire (A₂ₓ, A_{2y}, A_{2z}), est supérieure à ladite valeur seuil d'accélération linéaire prédéterminée T_{A}, de manière à détecter si le tibia de la seconde jambe de la personne est perpendiculaire au sol, L) passer en mode veille ledit dispositif esclave (1) et ledit dispositif maître (2) en une des deux conditions suivantes:
▪ quand ladite valeur moyenne de ladite seconde accélération linéaire le long de l'axe y (*̅A̅*̅_̅{̅1̅*̅y̅*̅}̅) de ladite première triade d'accélération linéaire (A₁ₓ, A_{1y}, A_{1z}) et ladite seconde accélération linéaire le long de l'axe y (A_{2y})de ladite seconde triade d'accélération linéaire (A₂ₓ, A_{2y}, A_{2z}) demeure supérieure à ladite valeur seuil prédéterminée de la première accélération linéaire T_{A} pour un second intervalle de temps prédéterminé Δt', supérieur audit premier intervalle de temps prédéterminé Δt, lorsque ledit premier indice K demeure inférieur à ladite première valeur de seuil prédéterminée T₁ pour ledit second intervalle de temps prédéterminé Δt',
▪ lorsque la valeur moyenne de la deuxième accélération linéaire le long de l'axe y (*̅A̅*̅_̅{̅1̅*̅y̅*̅}̅) de ladite première triade d'accélération linéaire (A₁ₓ, A_{1y}, A_{1z}) inférieure à ladite valeur seuil prédéterminée de la première accélération linéaire T_{A} et/ou la valeur moyenne de la seconde accélération linéaire le long de l'axe y (A̅_̅{̅2̅y̅}̅) de ladite seconde triade d'accélération linéaire (A₂ₓ, A_{2y}, A_{2z}) est inférieure à ladite première valeur seuil prédéterminée de l'accélération linéaire T_{A}, et lorsque ledit premier indice K demeure inférieur à ladite valeur seuil prédéterminée T₁.

10. La méthode selon l'une quelconque des revendications 8 ou 9, est **caractérisée par le fait que**: l'étape A) comprend l'acquisition à chaque instant temps t d'une vélocité angulaire autour de l'axe y (V_{1y}) associé audit dispositif esclave (1), l'étape B) comprend le filtrage à chaque instant temps t de ladite vélocité angulaire autour de l'axe y (V_{1y}) associé audit dispositif esclave (1) aux moyens dudit premier filtre Mahony pour éliminer une troisième erreur de décalage associée au premier gyroscope (121) à travers la première triade d'accélération linéaire (A₁ₓ, A_{1y}, A_{1z}), et obtenir à chaque instant temps une troisième vélocité angulaire autour de l'axe y (V_{1y}'), l'étape C) comprend l'acquisition à chaque instant temps *t une vélocité* angulaire autour de l'axe y (V_{2y}) associé audit dispositif maître (2), l'étape D) comprend le filtrage à chaque instant temps de ladite vélocité angulaire autour de l'axe y (V_{2y}) associé audit dispositif maître (2) aux moyens dudit second filtre Mahony pour éliminer une quatrième erreur de décalage associée au second gyroscope (221) à travers ladite seconde triade d'accélérations linéaires (A₂ₓ, A_{2y}, A_{2z}), et obtenir à chaque instant temps t une vélocité angulaire autour de l'axe y (V_{2y}'), dans ladite méthode qui comprend les étapes suivantes:
M) calculer à chaque instant temps *t* le module de ladite vélocité angulaire autour de l'axe y (V_{1y}) associé audit dispositif esclave (1), pour obtenir sa valeur absolue (|V_{1y}'|),
N) calculer à chaque instant temps *t* le module de ladite vélocité angulaire supplémentaire autour de l'axe y (V_{2y}') associé audit dispositif maître (2), pour obtenir sa valeur absolue (|V2y'|),
O) calculer à chaque instant temps *t* un second indice K' ajoutant la valeur absolue de ladite vélocité angulaire autour de l'axe y (|V_{1y}'|) associée au dispositif esclave (1) en un instant temps t sa valeur absolue de la ladite vélocité angulaire autour de l'axe y (|V_{2y}'|) associé au dispositif maître (2), au même instant temps t, où ladite étape
O) comprend les sous-étapes suivantes:
01) vérifier à chaque instant temps t si le second indice *K'* est supérieur à une valeur de seuil prédéterminé *T₃*, de manière à détecter si ladite personne tourne sur elle-même.

11. La méthode selon l'une quelconque des revendications 8-10, est **caractérisée par le fait que** l'étape A) comprend l'acquisition à chaque instant temps *t* d'une vélocité angulaire autour de l'axe z (V_{1z}) associé audit dispositif esclave (1), l'étape B) comprend le filtrage à chaque instant temps t de chaque vélocité angulaire autour de l'axe z (V_{1z}) associé audit dispositif esclave (1) aux moyens dudit premier filtre Mahony pour éliminer une cinquième erreur de décalage associé avec le premier gyroscope (121) à travers ladite première triade d'accélération linéaire (A₁ₓ, A_{1y}, A_{1z}), et obtenir à chaque instant temps *t* une vélocité angulaire supplémentaire autour de l'axe z (V_{1z'}), l'étape C) comprend l'acquisition à chaque instant temps t d'une vélocité angulaire autour de l'axe z (V_{2z}) associé audit dispositif maître (2), l'étape D) comprend le filtrage à chaque instant temps t de ladite vélocité angulaire autour de l'axe z (V_{2z}) associé audit dispositif maître (2) aux moyens dudit second filtre Mahony pour éliminer une sixième erreur de décalage associée avec le second gyroscope (221)à travers la triade d'accélération linéaire (A₂ₓ, A_{2y}, A_{2z}), et obtenir à chaque instant temps *t* une vélocité angulaire autour de l'axe z (V_{2z}'), dans ladite méthode comprenant les étapes suivantes:
P) calculer à chaque instant temps t le module de ladite vélocité angulaire supplémentaire autour de l'axe z (V_{1z}') associé avec le dispositif esclave (1), pour obtenir sa *valeur absolue (*|*V_{1z}'*|*)*,
Q) calculer à chaque instant temps t le module de ladite vélocité angulaire autour de l'axe z (V_{2z}') associé au dispositif maître (2), pour obtenir sa valeur absolue (|V_{2z}'|),
R) calculant à chaque instant temps un troisième indice K" ajoutant la valeur absolue de ladite vélocité angulaire autour de l'axe z *(*|*V_{1z}'*|*)* associé avec le dispositif esclave (1) en un instant temps t avec la valeur absolue de ladite vélocité angulaire autour de l'axe z (|V_{2z}'|) associé au dispositif maître (2) au même instant temps t, ladite étape
R) comprend les sous-étapes suivantes :
R1) vérifier si le troisième indice K" est supérieur à une quatrième valeur seuil prédéterminée de manière à détecter si ladite personne bouge le pelvis sur son plan frontal (P).
